# EUROPEAN PATENT APPLICATION

(11) **EP 4 814 806 A1**
(43) Date of publication of application: **30.09.2026**
(21) Application number: 25166698.8
(22) Date of filing: 27.03.2025
(51) Int. Cl.: G06N 10/40, G06N 10/20, G06N 10/70

(54) **FUSION BASED QUANTUM COMPUTING DEVICE AND SYSTEM**

(71) Applicant: Sparrow Quantum ApS, 2000 Frederiksberg (DK); Københavns Universitet, 1165 Copenhagen K (DK)
(72) Inventor: CHAN, Ming Lai, 2000 Frederiksberg (DK); PAESANI, Stefano, 1165 Copenhagen K (DK); SØRENSEN, Anders Søndberg, 1165 Copenhagen K (DK); LODAHL, Peter, 2000 Frederiksberg (DK)
(74) Representative: COPA Copenhagen Patents

(57) **Abstract**

The present disclosure provides a fusion based quantum computing (FBQC) device, comprising a first substrate, wherein the first substrate comprises: a deterministic entanglement source configured to generate a stream of single photons, wherein the deterministic entanglement source is configured to trap a single particle having an intrinsic property of a spin to define a spin-qubit, such that the deterministic entanglement source is configured to hold the spin-qubit, wherein the deterministic entanglement source is configured to allow control of the spin via one or more field(s), such as a magnetic field and/or an electromagnetic field, from one or more radiation source(s), and wherein the deterministic entanglement source is configured such that when the one or more radiation sources is/are operated in a controlled manner, then the deterministic entanglement source emits, in a repetitive manner, a single photon as part of the stream of single photons such that at least the single photon is entangled with the spin-qubit, thereby generating a stream of entangled photons; and an output coupler optically connected to the deterministic entanglement source, such that the output coupler is configured to optically couple out the stream of entangled photons.

## Description

The present disclosure relates generally to a quantum device and system. More specifically, the present disclosure relates to a fusion based quantum computing (FBQC) device and a system based on such.

### BACKGROUND

Quantum computing systems may implement qubits (quantum bits) as information carriers. Whereas bits in conventional non-quantum computing systems (e.g., classical computing systems) may represent a first state (e.g., binary "1", a high state) or a second state (e.g., binary "0" a low state), qubits may represent a first state and a second state, but also a superposition of the first and second state where the qubits may have complex-valued representations that may be entangled with one another in complex space. Practical realization of quantum computers, however, remains a demanding task. One challenge is the reliable creation and entangling of qubits and another challenge is the scalability of quantum systems.

### SUMMARY

It is an object of the present disclosure to provide a device and a system that reliably creates and entangles qubits. It is a further object of the present disclosure to provide quantum system easily and effectively scales in size. Further, it is an object of the present disclosure to provide practical realizations of a quantum computer.

Thus, the present disclosure relates to a fusion based quantum computing (FBQC) device and a system based on such.

Accordingly, in a first aspect is disclosed a fusion based quantum computing (FBQC) device, comprising a first substrate, wherein the first substrate comprises:
o a deterministic entanglement source configured to generate a stream of single photons, wherein the deterministic entanglement source is configured to trap a single particle having an intrinsic property of a spin to define a spin-qubit, such that the deterministic entanglement source is configured to hold the spin-qubit, wherein the deterministic entanglement source is configured to allow control of the spin via one or more field(s), such as a magnetic field and/or an electromagnetic field, from one or more radiation source(s), and wherein the deterministic entanglement source is configured such that when the one or more radiation sources is/are operated in a controlled manner, then the deterministic entanglement source emits, in a repetitive manner, a single photon as part of the stream of single photons such that at least the single photon is entangled with the spin-qubit, thereby generating a stream of entangled photons; and
∘ an output coupler optically connected to the deterministic entanglement source, such that the output coupler is configured to optically couple out the stream of entangled photons.

Further, the FBQC device comprises a second substrate, wherein the second substrate comprises:
∘ an optical switch optically connected to the output coupler, wherein the optical switch is configured to direct a plurality of entangled photons from the stream of entangled photons to a plurality of paths; and
∘ a fusion circuit optically connected to at least one of the plurality of paths, wherein the fusion circuit is configured to perform a fusion of at least one entangled photon from the plurality of entangled photons from at least one of the plurality of paths with at least another entangled photon arriving from another path.

In preferred embodiments of the first aspect, the FBQC device comprises a quantum gate located upstream of the optical switch and configured to provide an operation on the stream of the entangled photons, wherein the operation provides a projection of at least a first entangled photon into a desired basis; and a detector unit located downstream of, or as part of, the fusion circuit, wherein the detector unit is configured to detect whether the fusion is successful or not.

In another aspect is disclosed a fusion based quantum computing (FBQC) system comprising the FBQC device according to the first aspect, and
- a plurality of optical switches located on the second substrate, or on a plurality of second substrates, and wherein at least one optical switch of the plurality of optical switches is optically connected to the deterministic entanglement source via the output coupler, and wherein the plurality of optical switches is configured to direct a plurality of entangled photons from the stream of entangled photons to a network of paths;
- a plurality of fusion circuits located on the second substrate, or on a plurality of second substrates, and wherein the plurality fusion circuits is optically connected to the network of paths, wherein the plurality of fusion circuits is configured to perform a plurality of fusions of at least a subset of entangled photons from the plurality of entangled photons from some paths in the network of paths with at least another subset of entangled photons from the plurality of entangled photons arriving from other paths in the network of paths,

wherein the network of paths arranged in a lattice located on the second substrate, or on a plurality of second substrates, wherein the lattice is defined by a plurality of nodes and a plurality of interconnecting points, wherein each interconnecting point is located between two neighboring nodes, wherein said node comprises one optical switch of the plurality of optical switches, and wherein said interconnecting point comprises one fusion circuit of the plurality of fusion circuits; and
a plurality of detector units located downstream of, or as part of, the plurality of fusion circuits, wherein the detector units are configured to detect whether the plurality of fusions is successful or not.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
**Fig. 1A** is a schematic diagram illustrating an exemplary embodiment of a 3-way switch/router.
**Fig. 1B** is a schematic diagram illustrating an exemplary embodiment of a quantum gate in the form of a unitary gate.
**Fig. 1C** is a schematic diagram illustrating an exemplary embodiment of a fusion circuit.
**Fig. 2** is a table with an example of an embodiment of the first substrate according to the present disclosure.
**Fig. 3** shows examples of embodiments of the deterministic entanglement source according to the present disclosure.
**Fig. 4** shows examples of quantum state generation
**Fig. 5** shows examples of fusions with different photon encodings
**Fig. 6** shows a first example of an embodiment of the FBQC system according to the present disclosure
**Fig. 7** shows an example of an embodiment of the FBQC device and system according to the present disclosure.
**Fig. 8** shows an example of a feedback control to an FBQC device according to the present disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced by other embodiments even if not so illustrated, or if not so explicitly described.

According to the first aspect, there is disclosed a fusion based quantum computing (FBQC) device, comprising a first substrate. In other words, the present disclosure provides a quantum device that is based on the fusion-based quantum computing (FBQC) model - a model of universal quantum computation in which entangling measurements, called fusions, are performed on the qubits of small constant-sized entangled resource states.

An entangled resource state is in the literature generated by a so-called resource state generator (RSG). Generally, there are two types of RSGs - a non-deterministic source and a deterministic source. In the present disclosure, the RSG is simply called an entanglement source, more specifically a deterministic entanglement source.

A deterministic entanglement source, is obviously from its name different from a non-deterministic entanglement source, simply called the non-deterministic source.

A non-deterministic source is also called a probabilistic entanglement source or simply a probabilistic source, or sometimes a stochastic source. Such a source is driven by a non-deterministic pump pulse, for example from a laser to excite a non-linear crystal, which may or may not produce a photon pair. The photon pair may be generated through a nonlinear optical process (e.g., spontaneous four wave mixing (SFWM), spontaneous parametric down-conversion (SPDC), second harmonic generation, or similar). Upon detection of one photon of a pair, the other photon is guaranteed to herald, resulting in a heralded single-photon source. The heralding process makes the photon generation probabilistic, which, when combined with a cascade of linear-optic circuits (to make entangled-photon states) would yield very few numbers of usable quantum states.

In contrast, a deterministic source, according to the first aspect, is a source that creates a photon deterministically when triggered by a laser. A deterministic source may however also be triggered by an electrical pulse. In other words, the deterministic source, according to the first aspect, produce single photons on demand and yields much larger numbers of usable quantum states in comparison to a non-deterministic source.

According to the first aspect of the present disclosure, the deterministic entanglement source is configured to generate a stream of single and entangledphotons.

Typically, and in previous work, quantum devices have been based on the fusion-based quantum computing (FBQC) model, but only relied on a non-deterministic source, particularly because the non-deterministic source is simple to operate.

The inventors of the presently disclosed FBQC device and system have realized that using a deterministic entanglement source, according to the first aspect, and part of the FBQC device and system, provides several advantages over using a non-deterministic entanglement source, although the operation of the deterministic source may be a little more complex than the operation of the non-deterministic source. For example, for an FBQC device using a non-deterministic source, the tolerable loss for photon loss is generally lower than in comparison for an FBQC device using a deterministic source. An FBQC device with a non-deterministic source may have a tolerable threshold for photon loss that is maximized at 2.3%, whereas the FBQC device with a deterministic source, according to the first aspect, may boost the loss threshold to 8%.

The particular deterministic source, as herein disclosed, is configured to trap a single particle having an intrinsic property of a spin to define a spin-qubit. Using spin-qubits, as defined by the spin of a particle, has shown to be an important feature to realize the high tolerable threshold. In the context of the word "particle", the particle as here referred to is an elementary particle, and accordingly fermions or bosons, and hence also composite particles, such as hadrons, atomic nuclei and atoms. In some embodiments, the particle is an electron or a hole.

Spin-qubits are qubits where the information ("0" bit, and/or "1" bit) is stored in the spin. As previously described, the spin may be the spin of a single electron or the spin of a single hole. The spin of a single electron in a magnetic field can be in the spin down (high energy) and/or in the spin up (low energy) state. In comparison to a classical bit, the spin down state will be the analogue to a "0" bit and spin up analogue to a "1" bit.

There are several advantages of using spin-qubits rather than other qubits, but one of the primary advantages in context with the presently disclosed FBQC device is the ability to realize multi-photon entanglement.

Multiphoton entangled quantum states are key to advancing quantum technologies such as multiparty quantum communications, quantum sensing, or quantum computation. Their scalable generation, however, has remained an experimental challenge. Whereas previous methods for generating these states relied on stitching together a plurality of photons from probabilistic sources, the inventors have now made it possible, using the presently disclosed FBQC device, to generate such states from a deterministic source, and thereby in an efficient manner.

Further details and advantages are described in the following.

### Deterministic entanglement source

In one embodiment, the deterministic entanglement source is embedded in or optically coupled to a planer waveguide. In a preferred embodiment, the planar waveguide is a photonic crystal waveguide (PCW). In another preferred embodiment, the planar waveguide is a single-sided waveguide. The single-sided waveguide may greatly enhance photon emission in a preferential direction, such as into a port, thus making it more efficient than for example a double-sided waveguide.

It is noted that according to the first aspect, the deterministic entanglement source is configured to allow control of the spin via one or more field(s), such as a magnetic field and/or an electromagnetic field, from one or more radiation source(s). Accordingly, when the entanglement source is embedded in or optically coupled to the planar waveguide, there should still be access to control the spin. Further, it is noted that the deterministic entanglement source is configured such that when the one or more radiation sources is/are operated in a controlled manner, then the deterministic entanglement source emits a single photon as part of the stream of single photons such that at least the single photon is entangled with the spin-qubit, thereby generating a stream of entangled photons. Accordingly, when the entanglement source is embedded in or optically coupled to the planar waveguide, there is also provided access to controlling the optical transitions. In this manner, the one or more field(s) is/are able to optically access the particle. According to the presently disclosed FBQC device, the radiation source(s), in combination with the particle, produce(s) a stream of single photons entangled with the spin-qubit. As previously described, this is provided when the radiation source(s) is/are operated in a controlled manner. Optimally, when operated in the controlled manner, a multi-photon entangled resource state may be generated.

In a preferred embodiment, the deterministic entanglement source is in the form of a quantum dot (QD), preferably a semiconductor GaAs QD or a semiconductor InAs QD. In such an embodiment the QD holds the spin-qubit, since the QD confines single electrons or single holes, and the spin is the intrinsic property of the electron or the hole. In such embodiment, the QD is said to form the spin qubit. In a most preferred embodiment, the QD is negatively charged.

Quantum dots, as an example, may be synthesized by the Stranski-Krastanov growth method where nanometer-sized dome-like objects naturally form due to nucleation of InAs, through strain induced by lattice mismatch between InAs and GaAs. The top and bottom GaAs layers may be P- and N-doped respectively to realize a PIN diode enabling one-way current flow. The thickness of each layer may carefully be engineered such that unwanted quantum tunneling process is suppressed. At the bottom of the diode, a series of alternating semiconductor material layers, such as AlAs and GaAs layers, may be grown to build a distributed Bragg reflector to reflect light and increase the photon collection efficiency.

Photonic crystal waveguide or structures, as an example, may be fabricated by etching nanometer-sized air holes through a diode (using electron-beam lithography) to form periodic arrays of photonic crystals. Alternating patterns between air and a semiconductor material may create strong modulation of refractive indices, which result in forbidden region of frequencies called photonic bandgap where light cannot penetrate. Creating a defect (that resembles a waveguide) in the pattern leads to only a few permitted optical modes within the defect. When a quantum dot is located in the waveguide region, it may emit into one of such modes with high efficiency.

Deterministic entangled photon sources based on quantum dots, such as described above, may supply a steady stream of high-quality entangled photon states useful for fault-tolerant photonic quantum computing and may generate entangled photons with near unity efficiency and high brightness, thereby surpassing previous probabilistic photon sources.

In another preferred embodiment, the deterministic entanglement source is different from a quantum dot and based on defects in color centers, or trapped ions, or neutral atoms. Such sources are also able to hold spin qubits, but in these embodiments, the spin is not an intrinsic property of electrons or holes.

### First substrate

In most embodiments, the first substrate is a printed circuit board (PCB). In most preferred embodiments, the first substrate is a chip or comprises a chip, in which a QD may be embedded. In such embodiments, the chip may be made by stacks of various doped semiconductor materials that together form a PIN-diode.

Further, in an embodiment where the first substrate is a PCB that comprises a chip in the form of a PIN-diode, electrical contacts between the PIN-diode and the PCB may be made by wire bonding with gold, allowing a static voltage to be applied directly to the chip for quantum dot charging and charge noise control. Accordingly, in the described embodiment, an electron may be loaded into the QD to form the ground state for a negatively charged quantum dot.

In most embodiments, the first substrate, and hence the deterministic entanglement source, is located in a cryostat. Accordingly, in most embodiments, the first substrate is cryo-compatible. This means that the first substrate, and hence the deterministic entanglement source, is configured to be cooled to cryogenic temperatures. For example, to suppress detrimental effect of phononic dephasing of the qubits, the cryogenic temperature should be below 4K.

Although the first substrate, and hence the deterministic entanglement source, in most embodiments, is located in a cryostat, not all of the radiation sources are necessarily located in cryostat. The electromagnetic field(s), such as from laser(s), may for example be guided into the cryostat and directed towards the deterministic entanglement source via a plurality of optical elements, such as lenses, mirrors, fibers, etc.

In some embodiments, the first substrate comprises a plurality of deterministic entanglement sources, wherein each of the deterministic entanglement sources according to the first aspect, and each with an output coupler according to the first aspect.

### Radiation sources

According to the first aspect, the deterministic entanglement source is configured to allow control of the spin via one or more field(s), such as a magnetic field and/or an electromagnetic field, from one or more radiation source(s). Furthermore, the deterministic entanglement source is configured such that when the one or more radiation sources is/are operated in a controlled manner, then the deterministic entanglement source emits a single photon as part of the stream of single photons such that at least the single photon is entangled with the spin-qubit, thereby generating a stream of entangled photons.

In the following, various embodiments of radiation sources are described.

In one embodiment, the one or more radiation source(s) is a magnetic field generator, preferably in the form of an electromagnet, configured to generate a magnetic field and apply the magnetic field to the deterministic entanglement source.

As described above in relation to the first substrate, the first substrate, and hence the deterministic source, may be located in a cryostat. Accordingly, in these embodiments, and to apply the magnetic field to the deterministic entanglement source, the electromagnet may also be located in the cryostat. The electromagnet may thus, in some embodiments, be a superconducting magnet.

In a preferred embodiment, the magnetic field is applied in a Voigt geometry. In a related embodiment, the magnetic field in the Voigt geometry is an in-plane magnetic field of more than 1 T, preferably more than 2T, more preferably more than 3T, most preferably around or more than 4T. In a most preferred embodiment, the Voight geometry is along a desired axis of the deterministic entanglement source. For example, when the deterministic entanglement source is embedded in a planer waveguide, the Voigt geometry may be along a desired axis (in the x/y-plane) of the planar waveguide. For example, in embodiments where the deterministic entanglement source is in the form of a QD, and an electron is trapped therein, the magnetic field in the Voigt geometry may Zeeman split the electron spin ground state into spin up and spin down. The spin of a single electron in the magnetic field may then either be in the spin down (high energy) or in the spin up (low energy) state. Applying the strong magnetic field in the Voigt geometry, as described above, may enable active spin control, but also provide access to clearly distinguishable optical transitions. The optical transitions are described later in relation to how these may be driven/controlled by another radiation source.

In an alternative or additional preferred embodiment, the magnetic field is applied in a Faraday geometry. In a related embodiment, the magnetic field in the Faraday geometry (out-of plane, along z-axis of the deterministic entanglement source) is more than 10 mT.

However, the Voigt geometry may enable efficient fusion operations in the fusion circuit, for example when the deterministic entanglement source is in the form of a QD. The connection between the Voigt magnetic field and efficient fusions may be very subtle - The Voigt field may modify the energy level of the QD which may (i) allow emission of highly indistinguishable photons, crucial for performing high-fidelity fusions, and/or (ii) enable a time-bin entanglement approach with long spin-echo delays, so encoded fusions can be done with a feedback called feedforward (as will be explained later).

For the Faraday field, there is a trade-off between doing fast spin rotations and indistinguishability, while they can emit more photons in a very short time < 30ns. However, electronics may not be able to respond in such short time, so the feedforward between consecutively emitted photons may be technologically challenging. Accordingly, a preferred embodiment of the presently disclosed device, is to have the first substrate in a magnetic field, where the magnetic field is applied in the Voigt geometry.

In one embodiment, the one of the one or more radiation source(s) is a first electromagnetic field generator in the form of a first laser configured to initiate the spin by generating laser pulses that are adapted to prepare two spin states in a superposition state. The two spin states may for example be provided by the magnetic field as described above. The laser pulses from the first laser may preferably be defined as n/2-pulses or n-pulses.

As an alternative to the above embodiment, the one or more radiation source(s) is a first alternative electromagnetic field generator in the form of a microwave generator configured to initiate spin by generating microwave pulses that are adapted to prepare two spin states in a superposition state, preferably via a planar antenna located on the first substrate.

In additional embodiments, in addition to one of the two above-described embodiments, another of the one or more radiation source(s) is a second electromagnetic field generator in the form of a second laser configured to drive an optically cycling transition of the two spin states. In other words, the second laser may drive the optical transitions that are available in the deterministic entanglement source, for example when the deterministic entanglement source is in the form of a QD. In relation hereto, it is noted that when the deterministic entanglement source is in the form of a QD and is in a strong Voigt magnetic field, such as described above, the QD has a four-level energy system, with access to four optical transitions and two Zeeman-split electronic ground states. The second laser may therefore be able to drive these optical transitions, thereby emitting the photons in the stream of single photons. The optical transitions may preferably be driven by generating laser pulses. Preferably, the laser pulses are in the picosecond regime, for example where the picosecond regime ranges from 1 ps to 1000 ps. The emitted photons (such as provided in the embodiments above and with a QD) may be highly indistinguishable (identical) and thereby allow for scalability. Furthermore, by having highly indistinguishable photons, subsequent photon fusions in the fusion circuit may enable and realize larger entangled states.

In yet additional embodiments, in addition to the above-described embodiments, related to a first and second electromagnetic field generator, yet another of the one or more radiation source(s) is a third electromagnetic field generator in the form of a third laser configured to read out the spin state, such as from a QD.

It is noted that the focus in some of the above embodiments is directed towards using a QD, but as previously described, there may be alternatives to this approach. However, using a QD is, as herein disclosed, provides a quantum system that easily and effectively scales in size according to the object of the present disclosure.

### Output coupler

According to the first aspect, the first substrate comprises an output coupler optically connected to the deterministic entanglement source, such that the output coupler is configured to optically couple out the stream of the entangled photons.

In some embodiments, the output coupler is a shallow etched grating coupler in a waveguide, such as the waveguide previously described. In most embodiments, the outcoupling efficiency is enhanced by optimizing the grating coupler design.

### Second substrate

According to the first aspect, the FBQC device comprises a second substrate, wherein the second substrate comprises: an optical switch optically connected to the output coupler, wherein the optical switch is configured to direct a plurality of entangled photons from the stream of entangled photons to a plurality of paths; and a fusion circuit optically connected to at least one of the plurality of paths, wherein the fusion circuit is configured to perform a fusion of at least one entangled photon from the plurality of entangled photons from at least one of the plurality of paths with at least another entangled photon arriving from another path.

In one embodiment, the second substrate is different from the first substrate. In another embodiment, the second substrate is separated from the first substrate. In most embodiments, the second substrate is a printed circuit board (PCB). In most preferred embodiments, the second substrate is a chip or comprises a chip.

In embodiments, where the substrate comprises a chip, the chip may be fabricated on silicon nitride (SiN) or single-crystal thin lithium niobate (LiNbO3 (LN)) films and bonded on a silica insulating substrate (lithium niobate on insulator (LNOI)) or similar materials compatible with CMOS technology. It may be advantageous to use these materials, as they may provide one or more of the following advantages: (1) strong electro-optical properties (such as for implementing a fast switch, (2) high transparency compatible with QD wavelengths, and (3) integrated circuits with low propagation loss can be implemented with tunable phase shifters of GHz modulation bandwidth etc. In some embodiments, the second substrate is not a chip or does not comprise a chip, as the above advantages may not always be needed.

In preferred embodiments, the second substrate comprises shielding configured to shield the detector unit, such as to reduce dark current, and/or shielding configured to shield electrical contacts, such as to read out currents generated from photon detection, for example with superconducting nanowires. In the embodiments with superconducting nanowires, the second substrate is cryo-compatible. This means that the second substrate, and hence the switch and the fusion circuit, is configured to be cooled to cryogenic temperatures, such as around or below 4K, for example to ensure superconductivity. Accordingly, in preferred embodiments, the second substrate is located in a cryostat. In some embodiments, the second substrate comprises a plurality of optical switches optically connected to a plurality of output couplers, wherein each of the optical switches is an optical switch as described in relation to the first aspect and each of the plurality of fusion circuits is a fusion circuit as described in relation to the first aspect.

### Optical switch

In one embodiment, the optical switch is an N-way switch, where N is larger than or equal to 2, preferably where N is larger than 2, such as N=3, or N=4, or N=5 or N=6.

It is remembered that the optical switch is configured to direct a plurality of entangled photons from the stream of entangled photons to a plurality of paths, and that a fusion circuit is optically connected to at least one of the plurality of paths. Accordingly, the plurality of paths may simply be the number N, such that the N-way switch provides N paths.

Accordingly, in most embodiments, the N-way switch is optically connected to N fusion circuits. As an example, a 3-way switch may direct the entangled photons to any of the three fusion circuits for detection/measurement. Further details and advantages of such switches will be elaborated on in examples related to the FBQC system.

In a preferred embodiment, the optical switch is an active optical switch comprising a first active element. The first active element may comprise a first variable beam splitter (VBS), and/or a first electro-optical modulator (EOM), and/or a first phase shifter. A variable beam splitter (VBS) may be configured to actively control its reflectivity.

A VBS may be implemented by using two passive beamsplitters, and one actively controlled phase shifter, which imprints a relative phase of ϕ between two paths. Accordingly, a VBS is essentially a Mach-Zehnder interferometer. Thus, in some embodiments, a VBS is configured to operate as a Mach-Zehnder interferometer.

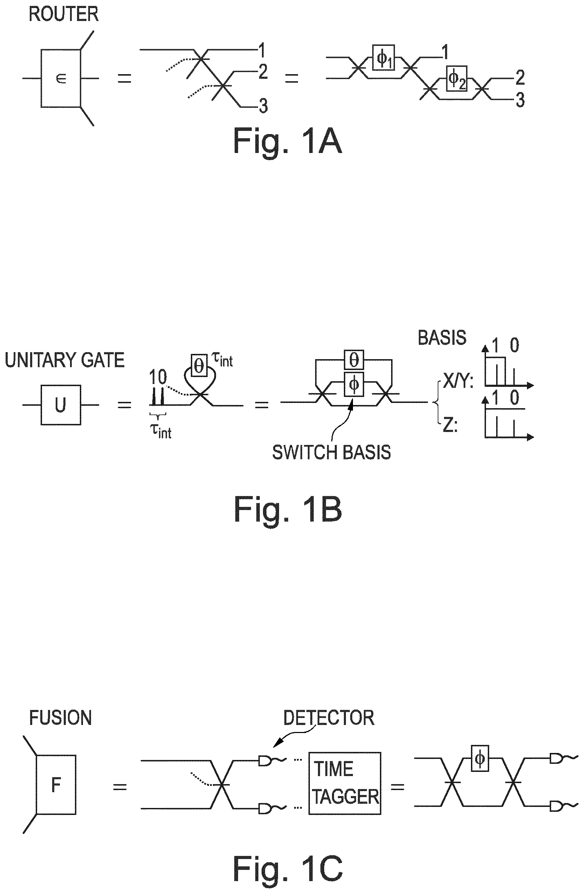

A 3-way switch/router may be realized by two VBS, for example as shown in **Fig. 1A****.** In this example, each VBS is implemented by using two passive beamsplitters and one actively controlled phase shifter, which imprints a relative phase of ϕ between two paths. As to be seen from this figure, when the photon is to be routed/switched to path 1, the first VBS is set to fully reflect the photon. Similarly, when the photon is to be routed/switched to path 2, the first VBS is set to fully transmit, while the second VBS reflects. Finally, when the photon is to be routed/switched to path 3, both VBS transmit.

### Time-bin encoding

In some embodiments, the FBQC device further comprises a time-bin interferometer configured to provide time-bin encoding of the stream of the entangled photons.

Time-bin encoding is a well-known technique to encode a qubit on a photon. There are many other alternatives to encode a qubit on a photon, such as path encoding, polarization encoding, or frequency encoding, where the last two techniques can be implemented without a time-bin interferometer, and directly from the deterministic entanglement source.

In a preferred embodiment, the time-bin interferometer is located between one of the one or more radiation sources and the deterministic entanglement source.

In embodiments, where the time-bin interferometer is located between one of the one or more radiation sources and the deterministic entanglement source, one of the radiation source(s) may in a preferred embodiment emit optical pulses, such as laser pulses, to control the spin, such as to control the spin transitions, for example from the second laser as previously described, such that the time-bin interferometer provides an early time-bin pulse and a late time-bin pulse having a time separation tᵢₙₜ., which in turn generates entangled time-bin encoded photons from the deterministic entanglement source. Each "time-bin encoded photon" may in this manner contain two photons, but the total number of photons does not matter as long as the information in the presence of a photon in each time bin is encoded.

In a preferred embodiment, the time-bin interferometer, as located between one of the one or more radiation sources and the deterministic entanglement source, comprises two beamsplitters, wherein a first beam splitter separates a pulse of the pulses in two separate paths, the paths being a first and a second path, wherein the second path is longer than the first path, and wherein a second beamsplitter recombines the pulses from the two separate path into a set of an early time-bin pulse and a late time-bin pulse with time separation tᵢₙₜ.

A superposition state of time-bin encoded photons may be prepared by varying the phase along the second path, for example by integrating an optical element along the second path, such as integrating a phase shifter, more preferably an adaptive phase shifter.

In another embodiment, the time-bin interferometer is located downstream of the one or more radiation sources and the deterministic entanglement source. In embodiments, where the time-bin interferometer is located downstream of the deterministic entanglement source, the time-bin interferometer may generate entangled time-bin encoded photons from the deterministic entanglement source.

By locating the time-bin interferometer between one of the one or more radiation sources and the deterministic entanglement source, the time-bin interferometer may be placed externally to the first substrate and thus in a free-space configuration. This may be advantageous as the time-bin interferometer may not be required to be cryo-compatible, if for example the first substrate is to be placed in a cryostat. Furthermore, in the free-space configuration, the time-bin interferometer may be easier to stabilize in comparison to a non-free-space configuration, such as when in a cryostat.

In embodiments, where the time-bin interferometer is located between one of the one or more radiation sources and the deterministic entanglement source, the time-bin interferometer is, in some embodiments, temperature-stabilized by active temperature stabilization, such as by a Peltier-element.

In comparison to path encoding, time-bin encoding may allow only a single output coupler to be optically connected to the deterministic entanglement source. Furthermore, in comparison to path encoding, time-bin encoding may also allow for a simpler fusion detection, for example by halving the number of detectors in the detector unit that are optically connected to the fusion circuit. All in all, time-bin encoding may greatly reduce the complexity of the FBQC device and/or the FBQC system.

### Quantum gate

According to the first aspect, the quantum gate is configured to provide an operation on the stream of the entangled photons, wherein the operation provides a projection of at least a first entangled photon into a desired basis. However, in most embodiments, the projection may be applied to all entangled photons from the deterministic entanglement source since all the entangled photons from the deterministic entanglement source, in most embodiments, will be directed to the quantum gate. The desired or projected basis may for example be an X-basis, a Y-basis, or a Z-basis.

In one embodiment, the entangled photons that enter the quantum gate may be set as default to be in the Z-basis. In such an embodiment, and if the desired basis is the X-basis or the Y-basis, the quantum gate may be configured to operate a Hadamard gate. Further, in such an embodiment, and if the desired basis is the Z-basis, the quantum gate may be configured to operate as an identity gate (as it effectively does nothing to the state).

Accordingly, in one embodiment, the quantum gate is a unitary gate, which:
- in a first mode is configured as a Hadamard gate, adapted to projects one or more of the entangled photons into an X-basis or a Y-basis, and
- in a second mode is configured as an identity operator, adapted to project one or more of the entangled photons into a Z-basis.

The desired basis may depend on the fusion circuit and the detector unit that detects the fusions, and a processor that processes the output from the detector unit. A reason for this is that a fusion outcome of two photons (which is to be measured) may have two desired bases, such as for example XX or ZZ.

In a preferred embodiment, the unitary gate comprises two phase shifters, preferably two adaptive phase shifters, and two beam splitters. For example, as shown in **Fig. 1B****,** a first beam splitter is optically connected to a first adaptive phase shifter ϕ and a second adaptive phase shifter θ, and the first and second phase shifter is optically connected to a second beamsplitter. Such a configuration may allow for changing between the first mode and the second mode. Since a VBS may be implemented as two passive beamsplitters, and one adaptive phase shifter, which imprints a relative phase of ϕ between two paths, as previously described, the unitary gate is here simply a VBS that is optically connected to a second adaptive phase shifter. Accordingly, the unitary gate as described above, collectively may act as a time-bin interferometer (as previously described) with time delay tᵢₙₜ to project a time-bin encoded photon in a desired basis.

In a most preferred embodiment, the above-described unitary gate with two phase shifters, particularly two adaptive phase shifters, is configured to work in combination with time-bin encoding, which, as previously described, may provide an early time-bin pulse and a late time-bin pulse with time separation tᵢₙₜ.

With time-bin encoding, the above-described unitary gate works as follows. The second adaptive phase shifter ϕ modulates the VBS reflectivity, such that the early pulse is reflected and delayed by tᵢₙₜ while the late pulse transmits. The two pulses then arrive simultaneously at the VBS, and hence they recombine to interfere in the same time-bin, effectively being projected into an equatorial basis with phase θ, which may be set to the desired basis. Accordingly, the VBS is set to reflect the early pulse and transmit the late pulse. In this manner, the unitary gate operates as a Hadamard gate, and thus in the first mode. A possible way to configure the unitary gate to work in combination with time-bin encoding is by ensuring that time-bin interferometer of the unitary gate has the same time delay tᵢₙₜ as the time-bin interferometer configured to provide time-bin encoding of the stream of the entangled photons. When the VBS is set to reflect the early pulse and the late pulse, the unitary gate operates as the identity operator, and thus in the second mode.

In view of the above, there may be some embodiments, where the unitary gate comprises an additional time-bin interferometer, wherein the additional time-bin interferometer comprises two paths, wherein one of the two paths provides a path difference between the two paths, such that when the two time bins of an encoded photon arrive at the additional time-bin interferometer, they split up along the two paths and recombine to interfere in the same time-bin, as ensured by configuring the additional time-bin interferometer with the same time delay tᵢₙₜ as the time-bin interferometer configured to provide time-bin encoding of the stream of the entangled photons, whereby the entangled time-bin encoded photons are projected into the desired basis.

It is noted that if the FBQC device is configured to prepare a logical qubit, the second phase shifter θ in the unitary gate may be passive since this may allow the photon to be projected in either X- or Z basis.

By default, the unitary gate may be set to operate as a Hadamard gate that projects photons into the X-basis. This may be particularly relevant, on the one hand, when two photons are to be fused. If, on the other hand, two photons are not to be fused, for example in cases when the fusion circuit is provided with only photons from a single deterministic entanglement source, i.e. connected to a single path, then the unitary gate is set to operate in the second mode. Accordingly, the detector unit only measures a single photon.

As previously described, the desired basis may depend on the fusion circuit and the detector unit that detects the fusions, and a processor that processes the output from the detector unit. A reason for this is that a fusion outcome of two photons (which is to be measured) may have two desired bases, such as for example XX or ZZ. Accordingly, in some embodiments, the basis of the unitary gate is selected dependent on whether the fusion (as detected by the detector unit) is successful or not.

### Fusion circuit and detector unit

Fusion circuits may utilize temporal fusion or spatial fusion. Temporal fusion may be provided by a single VBS, such as shown in **Fig. 1C****.** As for other elements forming the FBQC device, the VBS may be implemented by using two passive beamsplitters and one actively controlled phase shifter, which imprints a relative phase of ϕ between two paths.

According to the first aspect, the detector unit may be a part of the fusion circuit or placed downstream of the fusion circuit.

In most embodiments, the detector unit comprises a plurality of detectors, here to be understood as photon detectors, such as two detectors or four detectors. The number of detectors may depend on whether the fusion is temporal fusion or spatial fusion, as temporal fusion may only need half of the detectors in comparison to spatial fusion. Accordingly, temporal fusion, i.e. fusion in time, is particularly promising for providing a practical solution to the FBQC device and system as herein disclosed.

In **Fig. 1C****,** the detector unit comprises two separate detectors. The detector unit could however be a single detector, for example if the fusion circuit is located at the boundaries of the lattice.

For input photons with time-bin encoding, temporal fusion is provided by having two photons to simultaneously arrive at the beamsplitter of the VBS and interfere. Successful temporal fusion may be provided by detecting coincidence clicks between the early and late time-bins recorded on the same detector or different detectors. In more detail, a fusion is a two-qubit measurement which projects two input photons into the Bell-state basis. This means by sending two separable photons through a fusion, the photons become an entangled Bell state but are simultaneously destroyed in the process.

### Optical fiber

In a preferred embodiment, an optical fiber is connected between the first substrate and the second substrate to optically connect the output coupler and the optical switch.

In this manner, there may be embodiments, where the first substrate is located inside a cryostat, while the other substrate is located outside the cryostat. In such embodiments, the entangled photons from the first substrate may pass through some filters before being fiber coupled to the second substrate, meaning that the filters may be placed between the first and the second substrate.

The output coupler may enable that the fiber may be connected to the first substate. In embodiments with time-bin encoding, it may suffice to provide a single fiber to connect to the deterministic entanglement source, while with path encoding, two fibers may be required to connect to the deterministic entanglement source.

In alternative embodiments, the first substrate and the second substate are directly coupled to each other, i.e. without one or more fiber(s).

### Feedback

In one embodiment, the one or more radiation source(s) comprise(s) one or more radiation controller(s) configured to control the respective radiation source in the controlled manner, and wherein the optical switch is an active optical switch comprising a first active element having a switch controller configured to control which path is selected among the plurality of paths for each of the entangled photons in the stream of the entangled photons, and/or wherein the quantum gate comprises a second active element having a quantum gate controller configured to control which desired basis that is selected for each of the entangled photons in the stream of entangled photons, and wherein the detector unit is coupled to a processor configured to provide a feedback-signal to the one or more radiation controller(s) and the switch controller and/or the quantum gate controller, whereby the fusion is adaptably controlled and optimized.

In the above-described embodiment, it is noted that the feedback-signal may be in the form of a classical feedback-signal, particularly because the detected signal from the detector unit is a classical signal. The detected signal may for example be photon detection clicks.

By having adaptive feedback to both the radiation controller(s) and the switch controller and/or the quantum gate controller, as described above, it may be possible to provide encoded fusion in an efficient manner. Encoded fusion refers to a fusion between two encoded qubits. An example of a resource-efficient and loss-tolerant type of encoded fusion is the repeat-until-success (RUS) fusion.

Accordingly, in one embodiment, the adaptive feedback as described above provides RUS fusion.

In most embodiments, the control of the radiation controller(s) and the switch controller and/or the quantum gate controller is provided by command, which may be in the form of quantum operations to be performed by one or more of the radiation source(s), the switch, and/or the quantum gate.

A RUS fusion may be implemented as follows. Photons are routed to a fusion circuit to perform RUS encoded fusions: For each encoded fusion, a physical fusion is first attempted. The measurement outcomes are obtained from photon detection and interpreted according to the click patterns. Based on the click patterns, there are two scenarios:
- a first scenario (try again): If the physical fusion needs to be reattempted, a command is sent to the radiation controller(s) and quantum gate controller to update settings for the radiation source(s) and quantum gate, respectively; and
- second scenario (next encoded fusion): If one or both encoded fusion measurement outcomes is obtained, or maximum fusion attempts is reached, further physical fusions are terminated and the next encoded fusion begins. A command is then sent to update the radiation source(s) and the switch.

In a preferred embodiment, the first active element comprises a first variable beam splitter, and/or a first electro-optical modulator (EOM), and/or a first phase shifter, and/or wherein the second active element comprises a second variable beam splitter, and/or a second electro-optical modulator (EOM), and/or a second phase shifter.

In a most preferred embodiment, the feedback signal is provided to the second laser, as previously described, preferably such that a pulse sequence of pulses from the second laser is modulated.

### Quantum states and multi-photon entanglement

In a preferred embodiment, the deterministic entanglement source and the one or more radiation sources are configured to generate the stream of entangled photons to form a redundantly encoded cluster state or a graph state.

A redundantly encoded cluster state resembles a cluster state with encoded "big" qubits. Each big qubit is encoded with multiple photonic qubits. The photons within the big qubit resemble a m-photon Greenberger-Horne-Zeilinger (GHZ) state. A redundantly encoded cluster state may enable encoded fusion between encoded qubits, where each encoded fusion has m attempts to perform a physical fusion between two resource states. Furthermore, for encoded fusion with a repeat-until-success (RUS) scheme, as described in the previous section, RUS requires a minimal number of photons per encoded qubit, since the number of emitted photons m per encoded fusion is changed adaptively based on measurement outcome of the previous physical fusion.

Accordingly, in a preferred embodiment, the adaptive feedback as described above provides RUS fusion, where the deterministic entanglement source and the one or more radiation sources are configured to generate the stream of entangled photons to form a redundantly encoded cluster state.

### FBQC system

In one embodiment, the FBQC system is configured to provide simultaneous single photons from the deterministic entanglement source, in the form of a single deterministic entanglement source, to the plurality fusion circuits, thereby enabling the plurality of fusions of at least the subset of entangled photons from the plurality of entangled photons from some paths in the network of paths with at least another subset of entangled photons arriving from the other paths in the network of paths.

This embodiment may for example be provided by having a fusion circuit located at a distance from the single deterministic entanglement source, wherein the fusion circuit is optically connected to the deterministic entanglement source via two paths in the network of paths. The two paths may be defined by the lattice having a lattice structure. For example, the lattice structure may be in the form of a hexagon, such that the network of paths is formed by a plurality of hexagons. To provide simultaneous photons to the fusion circuit and from the single deterministic entanglement source (such as emitting time-bin encoded photons) a fiber delay may be provided to delay the resource state (such as comprising multiple photons) generated in a first clock cycle, such that its photons interfere simultaneously with those from the next generated resource multi-photon state, i.e. from a second clock cycle being a repetition of the first clock cycle. The fiber delay, as provided by an optical fiber, may for example form part of the network of paths.

As an alternative to using a single deterministic source, a plurality of deterministic entanglement sources may be used. Accordingly, in an alternative embodiment, the FBQC system further comprises: a plurality of deterministic entanglement sources located on the first substrate, or on a plurality of first substrates; a plurality of output couplers optically located on the first substrate, or on a plurality of first substrates, wherein the plurality of output couplers is connected to the plurality of deterministic entanglement sources such that the plurality of output couplers is configured to optically couple out the stream of entangled photons from the plurality of deterministic entanglement sources; and a plurality of quantum gates located upstream of the plurality of optical switches and configured to provide an operation on the stream of the entangled photons, wherein the operation provides a projection of at least a subset of entangled photons into a desired basis.

The FBQC system, as described in the above alternative embodiment, may be configured to provide simultaneous single photons from the plurality of deterministic entanglement sources, and/or from an individual deterministic entanglement source among the plurality of deterministic entanglement sources, to the plurality fusion circuits, thereby enabling the plurality of fusions of at least the subset of entangled photons from the plurality of entangled photons from some paths in the network of paths with at least another subset of entangled photons arriving from the other paths in the network of paths.

This embodiment may for example be provided by having a fusion circuit located at an identical distance from two deterministic entanglement sources. This means that the distance from one deterministic entanglement source to the fusion circuit must be identical to the distance from the other deterministic entanglement source to the fusion circuit. Accordingly, the interconnection point may be located exactly in the middle between two nodes. Such a configuration may for example be possible by having the lattice with a lattice structure, wherein the lattice structure may be in the form of a hexagon, such that the network of paths is formed by a plurality of hexagons. To provide simultaneous photons to the fusion circuit and from two single deterministic entanglement sources (such as emitting time-bin encoded photons) there is no need for delaying the resource state (such as comprising multiple photons) generated in a first clock cycle from a second clock cycle being a repetition of the first clock cycle. The reason for this is that the resource states generated from each clock cycle from each of the two deterministic entanglement sources may simply interfere when the two deterministic entanglement sources emit photons simultaneously.

In view of the above, the simultaneous single photons from the plurality of deterministic entanglement sources to the plurality of fusion circuits may be provided by configuring the plurality of deterministic entanglement sources to simultaneously emit single photons. This may for example be provided by configuring the one or more radiation sources for one deterministic entanglement source in the same manner as for the others of the plurality of deterministic entanglement sources, and/or controlling the one or more radiation sources in the same manner. Additionally, or alternatively, the one or more radiation sources for one deterministic entanglement source may be configured to simultaneously control the plurality of deterministic entanglement sources, for example by optical beam splitters and/or optical gratings. Further, the simultaneous single photons from the plurality of deterministic entanglement sources to the plurality of fusion circuits may in some be embodiments be provided by configuring the network of paths such that the lattice is formed by a lattice structure, and wherein the lattice structure is periodic. Preferably, the lattice structure may be in the form of a hexagon, such that the network of paths is formed by a plurality of hexagons.

In some embodiments the plurality of quantum gates is located on the second substrate or on a plurality of second substrates. In this regard, there are some embodiments, where each node further comprises a quantum gate.

In other embodiments, said plurality of second substrates are optically connected to each other via a plurality of guiding optics, preferably by a plurality of flexible guiding elements, such as optical fibers and/or preferably by a plurality of free-space guiding elements, such as optical mirrors and/or optical gratings. In other words, the paths and hence the network of paths may be defined by the guiding optics.

In a preferred embodiment, each of the plurality of optical switches are active optical switches comprising the first active element having a switch controller configured to control which path is selected in the network of paths for the plurality of entangled photons in the stream of the entangled photons and wherein the plurality quantum gate comprises the second active element having a quantum gate controller configured to control which desired basis that is selected for the plurality of entangled photons in the stream of entangled photons, and wherein the plurality of detector units is coupled to the processor configured to provide a feedback-signal to the one or more radiation controller(s) and the switch controller for each of the plurality of optical switches and the quantum gate controller for each of the quantum gates, whereby the plurality of fusions is adaptably controlled and optimized. The feedback as described here may enable a lower loss of photons, particularly because the photons may be fused more efficiently.

In a most preferred embodiment, each of the quantum gates in the plurality of quantum gates is a unitary gate, which:
- in a first mode is configured as a Hadamard gate, adapted to projects one or more of the entangled photons into the desired basis being an X-basis or a Y-basis, and
- in a second mode is configured as an identity operator, adapted to project one or more of the entangled photons into the desired basis being a Z-basis.

In a most preferred embodiment, each of the quantum gates in the plurality of quantum gates comprises an additional time-bin interferometer, wherein the additional time-bin interferometer comprises two paths, wherein one of the two paths provides a path difference between the two paths, such that when the two time bins of an encoded photon arrive at the additional time-bin interferometer, they split up along the two paths and recombine to interfere in the same time-bin, as ensured by configuring the additional time-bin interferometer with the same time delay tᵢₙₜ as the time-bin interferometer configured to provide time-bin encoding of the stream of the entangled photons, whereby the entangled time-bin encoded photons are projected into the desired basis.

The effect and advantages of the plurality of gates are the same as described in relation to the gate of the first aspect, but by controlling the plurality of gates as described above, fusion is optimized even further.

To understand the FBQC device and FBQC system in more detail, several specific (non-limiting) examples are provided in the following.

### Example 1 - An example of an embodiment of the first substrate according to the present disclosure

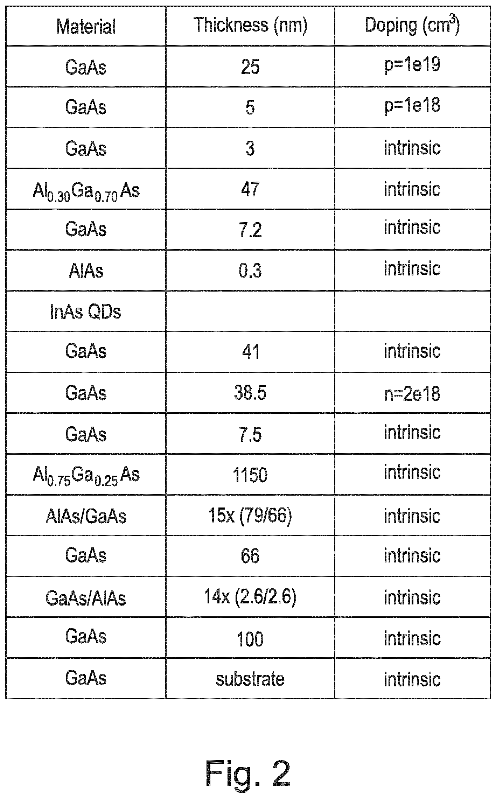

In this example, the first substrate is described as embedding a semiconductor InAs QD. **FIG. 2** shows a table with an example of a composition of an InAs quantum dot wafer. The composition describes a cross-section of the wafer materials. The top and bottom GaAs layers are p- and n-doped respectively to enable a diode. The InAs quantum-dot layer is a few nanometers thick. The 1150 nm Al_{0.75}Ga_{0.25}As substrate is a sacrificial layer that is removed to create suspended waveguides.

### Example 2 - Examples of embodiments of the deterministic entanglement source according to the present disclosure

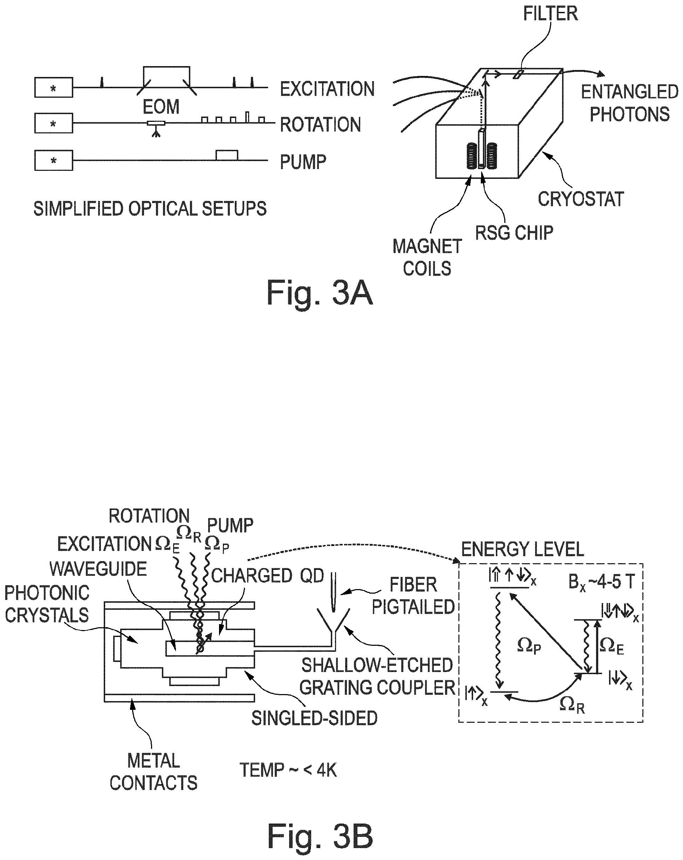

In **Fig. 3A** is shown an example of a laser setup that produces excitation pulses and couples into the interior of a cryostat, which hosts the first substrate comprising a chip with the deterministic entanglement source and supplies an external magnetic field. In this example, the chip is kept in cryogenic temperature (< 4 K) to suppress the detrimental effect of phononic dephasing.

**Fig. 3B** illustrates a single-sided photonic-crystal waveguide with a negatively charged quantum dot. The right panel shows the corresponding energy level diagram, with (shaded) cycling transitions.

An example of operation of the deterministic entanglement source may be as follows:
The pulse duration for optical excitations may be set to be shorter than the quantum-dot lifetime to avoid re-excitation within the pulse. However, the spectral width of the excitation pulse also may set to be narrower than the frequency splitting between two cycling transitions, which is determined by the electron and hole g-factors as well as the external magnetic field. A wider spectral width may lead to unwanted driving of another cycling transition. This may be circumvented by increasing the magnetic field, but there might be a trade-off in spin coherence at high magnetic fields. With these considerations in mind, the excitation laser may be driven by one of the cycling transitions (e.g., |↓〉ₓ → |⇓↑↓〉ₓ) with an optical n-pulse of Rabi frequency Ω_{E}.

The effective Rabi frequency for spin rotation may be set to be sufficiently high (Ω_{R} > 100 MHz) to avoid driving Hartmann-Hahn resonances and ensure a high spin rotation Q-factor. To prolong spin coherence during resource-state generation, a Hahn-echo sequence (which comprises of n/2 - n (repeat certain times) - n/2 spin rotation pulses) may be implemented. The inter-pulse delay may be chosen such that the Hahn-echo visibility is maximized while being compatible with the laser repetition period, time-bin interferometer-delay as well as the photo-detector dead time. For spin initialization, it may be advantageous to drive the non-cycling transition (e.g., |↓〉)ₓ → |⇑↑↓〉ₓ) which may have an added benefit of stimulated emission from the nuclear-dressed state |↓, I_{z}〉 to |↑, I_{z}〉 as required in nuclear spin cooling.

Nuclear spin cooling may be initiated at the beginning of resource-state generation to extend the intrinsic electron spin dephasing time. This may reduce nuclear induced spin decoherence during spin rotations. Raman or Ramsey cooling may be adopted to extend the spin dephasing time by at least tenfold. In general, nuclear cooling works by taking advantage of the hyperfine interaction between the quantum-dot electron and neighboring nuclear spins enabled by strain-induced quadrupolar gradients. Driving the nuclear microstates sequentially with periodic optical spin control pulses has an effect of converging the randomly-spread nuclear spin states into one collective state, effectively reducing thermal fluctuations on the quantum-dot electron.

Each entangled-photon source creates photons which in this example are encoded in time bins. To achieve this, a set of excitation pulses (early and late) is first generated by sending an excitation laser pulse through a time-bin interferometer (depicted in **Fig. 3A****).** The first 50:50 beamsplitter separates the pulse into going through short and long paths, while the second beamsplitter recombines them into a set of early and late-bin excitation pulses with time separation tᵢₙₜ. Each pulse excites the quantum dot emitting one photon. For optimal operation, the time-bin interferometer may be either actively (or passively) stabilized with near-unity classical interferometric visibility Vᵢₙₜ and long-time stability.

### Example 3 - Examples of quantum state generation

The underlying principle governing resource-state generation may be the creation of spin-photon entanglement from the waveguide-mediated spin-photon interface. A spin-photon interface refers to a coherent interface between a photon and the spin states of a qubit, and in this example is enabled by embedding a quantum dot within a waveguide. The planar waveguide not only allows outcoupling of photons emitted from the cycling transitions of a quantum dot, but also enables direct driving of its spin transitions through either excitation on top or microwave pulses with a planar antenna. This means one could implement a pulse sequence interleaving between optical excitation and spin rotation pulses, to generate a spin-photon entangled state.

For example, a spin-photon Bell state may be generated by the following steps:
Apply a spin n/2 pulse to prepare the electron in a superposition state: |ψ〉 ~ |↑〉ₓ + |↓〉ₓ.

Excite the cycling transition |↓〉ₓ → |⇓↑↓〉ₓ with an early pulse, resulting in |ψ〉 ~ |↑〉ₓ|Ø〉 + |↓)ₓ|e), where |Ø〉 represents a vacuum state with zero photon since I↑〉x is not excited.

Apply a spin n-pulse to invert the correlations and make |↓〉ₓ available: |ψ〉 ~ |↓〉|Ø〉 - |↑〉ₓ|e〉.

Excite the cycling transition |↓〉ₓ → |⇓↑↓〉ₓ again with a late pulse, resulting in |ψ_{final}〉 ~ |↓)ₓ|I〉 - |↑〉ₓ|e〉.

|ψ_{final}〉 describes the entangled state between two physical qubits (electron spin and time-bin encoded photon). It means the photon emission time is correlated with the electron spin states and thus the two systems become inseparable. Measuring the electron spin in one state (e.g., |↓〉ₓ) will inevitably reveal information on the photon (|I〉). The interesting application of this protocol is that if it is repeated multiple times, a time-bin encoded photon is generated in each cycle and appended to the state. This makes the entangled state longer, which is like weaving the entangled string.

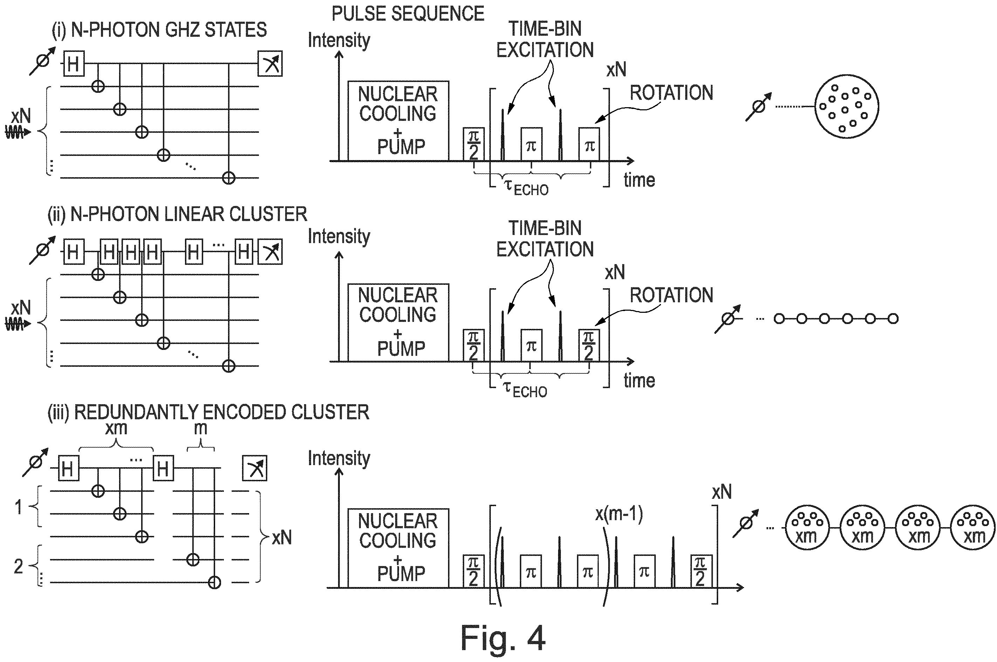

**Fig. 4** shows three types of resource states that can be generated using the above principles. Left panels show the quantum circuit diagram with a spin and N ancillary photons initialized in the |0〉 state, using Hadamard and controlled-NOT gates. Here the spin state is shown to be measured at the end of the generation protocol. However, when operating the FBQC device, the spin state may only be read out and reset after all fusions are completed. Right panels show that corresponding experimental pulse sequence to realize the protocols. Hadamard gates are performed by applying spin n/2 pulses whereas each controlled-NOT gate is achieved by a spin n pulse sandwiched between two optical excitation pulses. One consideration of the pulse sequence is that a Hahn-echo sequence may always be present, meaning it may be important to maintain the same inter-pulse delay T_{echo}.

### Example 4 - Fusions with different photon encodings

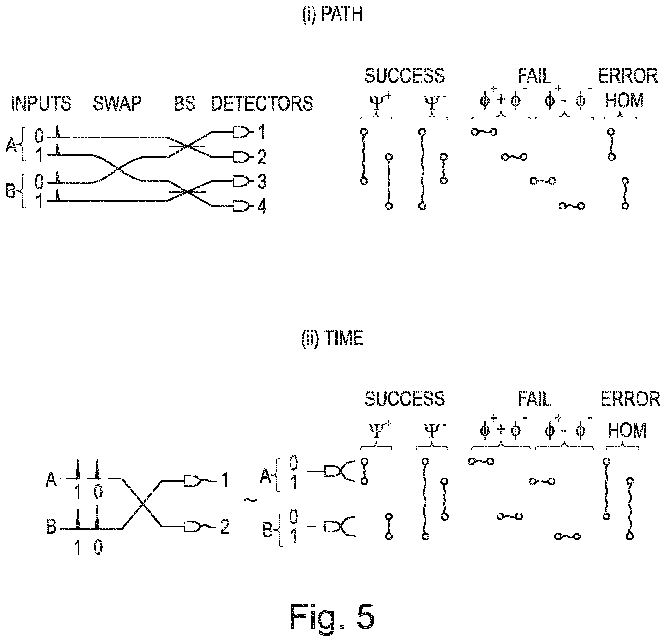

In **Fig. 5****,** two types of physical fusions are presented as examples of fusions. Path encoded fusion or spatial fusion is implemented by sending two photonic qubits (A and B) through four paths (realized by waveguides). The first two paths constitute as the physical |0〉 and |1) states for each qubit, and therefore the presence of photon in one of these modes means the photon is in the corresponding state. The photons traverse through linear-optic elements including a SWAP gate and a beamsplitter (BS), ending up in four photodetectors. The right panel of **Fig. 5(i)** shows three possible fusion outcomes for various click patterns. Below we summarize:
Fusion success: By detecting coincidence between detectors 1 and 3, the input photons are successfully projected into the Bell state ψ⁺ = |01〉 + |10〉.

Fusion failure: If only one detector lights up without a coincidence click, this means fusion has failed and effectively projects each of the input photons into the Z-basis. From here the ZZ fusion outcome can still be recovered from two single-qubit Z-basis measurements. ZZ is thus referred to as the failure basis. For the system as here considered, the failure basis is set to be XX, which requires converting each input photon into X-basis via a unitary gate before undergoing fusion.

Fusion error: When the input photons are not fully indistinguishable, i.e., due to phonon dephasing of the emitter, there is a finite probability of obtaining a coincidence click between detectors 1 and 2, and also a click between detectors 3 and 4. In such case, these clicks result from imperfect Hong-Ou-Mandel photon interference at the beamsplitter. Without dephasing this would have led to successful projection in either ψ⁺ or ψ⁻. Therefore, one could interpret these outcomes as a fusion success but with error that needs to be kept track of when operating the FBQC device to perform quantum computations.

Similarly, fusion can be performed in the time domain. This type of fusion may be particularly promising for FBQC due to its reduced overhead, as the number of required detectors is halved. For input photons with time-bin encoding, temporal fusion only requires them to simultaneously arrive at a beamsplitter and interfere. For successful temporal fusion, detecting coincidence clicks between the early and late time-bins recorded in the same detector, e.g., (e_{D1}, I_{D1}), would project the input photons into ψ⁺.

### Example 5 - A first example of an embodiment of the FBQC system according to the present disclosure

An FBQC system, alternatively called a fusion network, describes the arrangement of fusion measurements required to construct a logical qubit and perform quantum computation. The FBQC system according to the second aspect of the present disclosure may be an FBQC system that adopts a given architecture. In this example is described an embodiment of the FBQC system according to the present disclosure that adopts a synchronous foliated Floquet color code (sFFCC) architecture.

Architectures adopt certain periodic structures like the Raussendorf-Harrington-Goyal (RHG) lattice. Such structures may form an error correction code that improves resilience of the logical qubit to error and loss.

As described, in this example, the architecture called a synchronous foliated Floquet color code (sFFCC) is adopted. This architecture is composed of fusions (edges) between 6 linear cluster states (vertices) in a unit-cell.

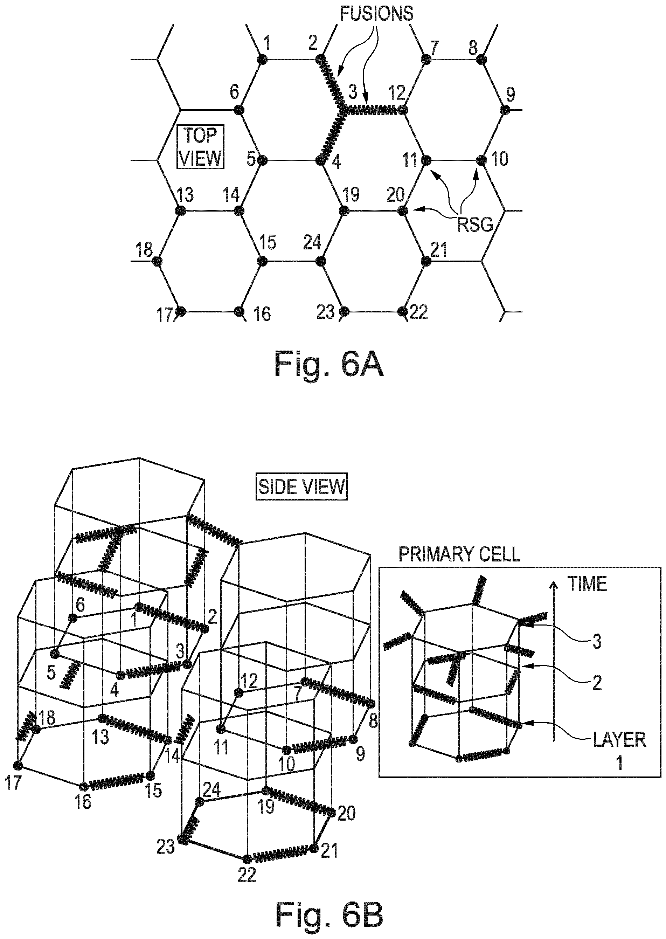

**Fig. 6A** shows the top view of the sFFCC architecture for a lattice size of L = 2. Here there are in total four unit-cells (shaded), each with 6 linear cluster states generated by deterministic entanglement sources. In this example, a deterministic entanglement source is referred to as a resource state generator (RSG). The RSG sites are arranged in a hexagonal lattice. Fusions are performed between photons from a RSG and its 3 neighboring state generators. Accordingly, for a lattice size of L = 2, there are in total 24 sites or nodes (vertices of the 4 shaded cells) supplying photons for fusion. For repeat-until-success (RUS) fusion scheme, this means 24 RSGs may be used. However, for other types of fusion schemes, a much lower number of RSGs may be needed. In principle, for a fusion scheme called REP fusion, only 1 RSG may be needed. REP refers to a fusion encoded with a static repetition code, where a resource state with a fixed number of photons m per encoded qubit is generated at a clock cycle.

As can be seen from **Fig. 6A****,** a 3-way switch/router is used to direct photons from a RSG to each of its neighbors. All cells are color-coded in either red, green or blue (not shown), which are important for error correction. For example, the shaded cell with RSGs 1-6 is colored in red, and the measurement operators for 12 fusions within the cell (including fusions F_{2,3}, F_{3,12}, F_{3,4}, etc.) together form a check operator, which gives an eigenvalue of +1, called syndrome, in the absence of fusion errors.

Likewise, the syndrome in a blue-colored cell includes fusion measurement outcomes between RSGs 3, 4, 12, 11, 19, 20. The fusion measurements in each cell are then used to verify if the measured eigenvalue is negative, in which case this would indicate that there is a measurement error within the cell. A set of syndromes for all cells constitute a syndrome graph, which is used to identify the origin of errors and keep track of errors during quantum computations.

**Fig. 6B** presents the side view of the sFFCC architecture. Here we want to show that fusions may be performed in successive layers along the time axis. On the first layer, only three fusions (indicated by three wiggly lines) within the unit cell are performed. A unit cell in the sFFCC consists of 6 layers progressing in time and can be further decomposed into two vertically stacked primary cells.

On the right panel shows a primary cell which indicates all fusions on the first three layers of a unit cell. Since a unit cell is composed of two repeating primary cells, this means 12 fusion circuits (3 on first two layers of the primary cell and 6 on the third) are needed to perform all fusions in a single unit cell, regardless of the lattice size L. This is important because as L grows, the number of fusion measurement would increase but the number of fusion circuits per unit cell stays constant. In general, for a lattice size of L the number of layers in a unit cell scales as 6L, while the number of unit cells in the lattice is L².

One remarkable benefit of sFFCC (compared to other state-of-the-art architectures) is that it is compatible with RUS encoded fusions, as long as any two RSGs involved in a fusion can emit photons synchronously/simultaneously. For instance, when a physical fusion fails, a classical command is sent to the respective RSGs where each emits a photon to initiate another attempt of temporal fusion. With RUS encoded fusions, the loss tolerance of the sFFCC architecture can reach 8% (compared to 2.25% with a REP fusion scheme).

### Example 6 - An example of an embodiment of the FBQC device and system according to the present disclosure

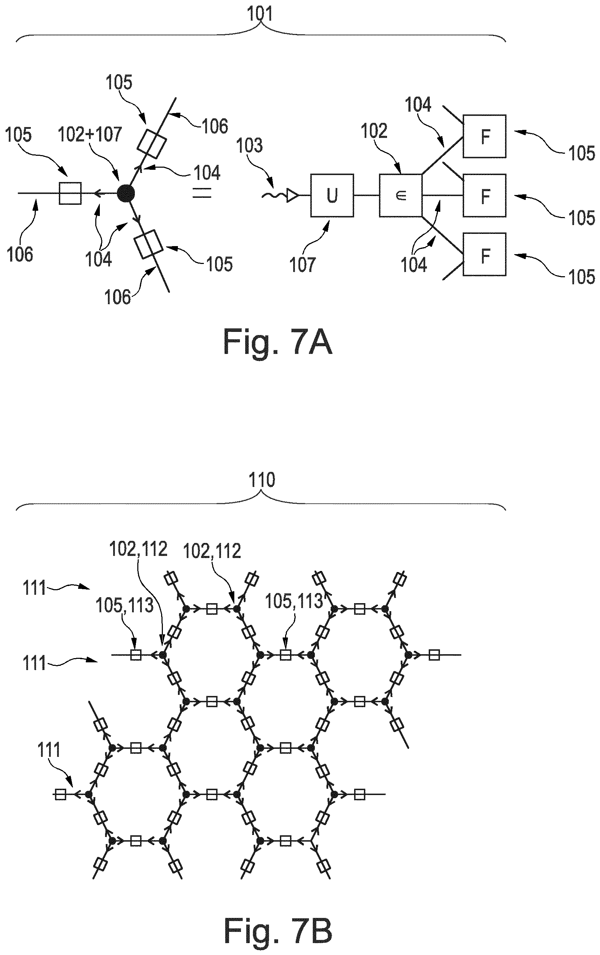

**Fig. 7A** shows an embodiment of a part of the FBQC device **101** according to the present disclosure. On the left side of the figure is shown an in-plane structure, while the right side shows a mixed plane structure.

Part of the FBQC device **101** is formed on a second substrate (not shown in **Fig.** 7A). The second substrate comprises an optical switch **102** optically connected to the output coupler (the output coupler is not shown since this is on the first substrate). However, **Fig. 3B** shows a single-sided photonic-crystal waveguide with a (negatively charged) quantum dot (in the first substrate), and also an output coupler coupled to a first end of an optical fiber **3.** The second end of the optical fiber **103** is optically connected to the quantum gate **107,** which is then connected to the optical switch **102** as can be seen on the right side of **Fig. 7A****.** The optical switch **102** is configured to direct a plurality of entangled photons from the stream of entangled photons to a plurality of paths **104.** In this example, the optical switch **102** is an N-way switch, where N is larger than 2, here N=3.

Further, **Fig. 7A** shows a fusion circuit **105** optically connected to at least one of the plurality of paths **104,** wherein the fusion circuit **105** is configured to perform a fusion of at least one entangled photon from the plurality of entangled photons from at least one of the plurality of paths **104** with at least another entangled photon arriving from another path **106.** In this case, a fusion circuit is optically connected to each of the plurality of paths **104.** Also shown in **Fig. 7A** is a quantum gate **107** located upstream of the optical switch **102** and configured to provide an operation on the stream of the entangled photons, wherein the operation provides a projection of at least a first entangled photon into a desired basis. The optical fiber **103** is connected to the quantum gate **107** and further the optical switch **102** shown on the left side of **Fig. 7A****,** but is out of the plane (thus not shown). In this example, a detector unit is located as part of the fusion circuit **105** (thus not shown). However, the detector unit is configured to detect whether the fusion is successful or not. The detector unit comprises a processor that processes the output from each of the detectors in the detector unit, such that the detector unit is able to determine whether the fusion is successful or not.

Another part of the FBQC device according to the first aspect is not shown in **Fig. 7A****,** but shown in **Fig. 3B****.** This figure shows a first substrate, wherein the first substrate comprises: a deterministic entanglement source configured to generate a stream of single photons, wherein the deterministic entanglement source is configured to trap a single particle having an intrinsic property of a spin to define a spin-qubit, such that the deterministic entanglement source is configured to hold the spin-qubit. This is because the waveguide in **Fig. 3A** comprises a quantum dot. As also shown in **Fig. 3B****,** the deterministic entanglement source is configured to allow control of the spin via one or more field(s), here using a magnetic field and an electromagnetic field from several radiation sources. In the present example, there are three lasers (also shown in **Fig. 3A****)** that generate three electromagnetic fields, while a magnet generates the magnetic field.

The deterministic entanglement source (here the QD) is configured such that when the one or more radiation sources are operated in a controlled manner, then the deterministic entanglement source emits, in a repetitive manner, a single photon as part of the stream of single photons such that at least the single photon is entangled with the spin-qubit, thereby generating a stream of entangled photons.

**Fig. 3B** further shows an output coupler optically connected to the deterministic entanglement source, such that the output coupler is configured to optically couple out the stream of entangled photons, in this case to the first end of the optical fiber **103.**

The first part of the FBQC device further comprises a time-bin interferometer configured to provide time-bin encoding of the stream of the entangled photons. Details of this are described in relation to **Fig. 3A** in Example 2. As also to be seen from **Fig. 3A****,** and described in Example 2, the time-bin interferometer is located between one of the one or more radiation sources and the deterministic entanglement source, and wherein one of said radiation source(s) emits optical pulses to control the spin, such that the time-bin interferometer provides an early time-bin pulse and a late time-bin having a time separation tᵢₙₜ, which in turn generates entangled time-bin encoded photons from the deterministic entanglement source.

**Fig. 7B** shows an embodiment of the FBQC system **110** according to the second aspect of the present disclosure. More specifically, **Fig. 7B** shows a fusion based quantum computing (FBQC) system based on the FBQC device as described in relation to **Fig. 7A****.**

Similar to **Fig. 7A****,** the first substrate is not shown in **Fig. 7B****.** However, according to the second aspect related to the FBQC system **10,** and thus this example, the FBQC system **110** comprises the FBQC device **101** according to the first aspect. This is also clear from the fact that the left side of **Fig. 7A** is present in **Fig. 7B****.**

Further, **Fig. 7B** shows the FBQC system **110,** which comprises a plurality of optical switches **112** located on the second substrate, or on a plurality of second substrates, and wherein at least one optical switch **102** of the plurality of optical switches **112** is optically connected to the deterministic entanglement source via the output coupler, and wherein the plurality of optical switches **112** is configured to direct a plurality of entangled photons from the stream of entangled photons to a network of paths **111.**

**Fig. 7B** also shows a plurality of fusion circuits **113** located on the second substrate, or on a plurality of second substrates, and wherein the plurality fusion circuits **113** is optically connected to the network of paths **111,** wherein the plurality of fusion circuits **113** is configured to perform a plurality of fusions of at least a subset of entangled photons from the plurality of entangled photons from a some paths in the network of paths **111** with at least another subset of entangled photons from the plurality of entangled photons arriving from other paths in the network of paths **111.**

As can also be seen in **Fig. 7B****,** the network of paths **111** is arranged in a lattice located on the second substrate, or on a plurality of second substrates, wherein the lattice is defined by a plurality of nodes **112** and a plurality of interconnecting points **113.** Arrows indicate the direction of travelling photons routed from a node.

Each interconnecting point **113** is located between two neighboring nodes **112,** wherein said node comprises one optical switch **102** of the plurality of optical switches **112,** and wherein said interconnecting point **113** comprises one fusion circuit **105** of the plurality of fusion circuits **113.**

As a part of the plurality of fusion circuits **113** is a plurality of detector units (thus not seen), wherein the detector units are configured to detect whether the plurality of fusions is successful or not.

In this example, the FBQC device **110** further comprises a plurality of deterministic entanglement sources located on the first substrate, or on a plurality of first substrates (not shown). Accordingly, there is a plurality of output couplers optically located on the first substrate, or on a plurality of first substrates, wherein the plurality of output couplers is connected to the plurality of deterministic entanglement sources such that the plurality of output couplers is configured to optically couple out the stream of entangled photons from the plurality of deterministic entanglement sources.

Further, in this example, a plurality of quantum gates **107** is located upstream of the plurality of optical switches and configured to provide an operation on the stream of the entangled photons, wherein the operation provides a projection of at least a subset of entangled photons into a desired basis.

Also in this example, the FBQC system **110** is configured to provide simultaneous single photons from the plurality of deterministic entanglement sources to the plurality fusion circuits **113,** thereby enabling the plurality of fusions of at least the subset of entangled photons from the plurality of entangled photons from some paths in the network of paths **111** with at least another subset of entangled photons arriving from the other paths in the network of paths **111.** Although not to be seen in **Fig. 7B****,** the simultaneous single photons from the plurality of deterministic entanglement sources to the plurality of fusion circuits **113** is provided by configuring the plurality of deterministic entanglement sources to simultaneously emit single photons. However, as to be seen from **Fig. 7B****,** the simultaneous single photons from the plurality of deterministic entanglement sources to the plurality of fusion circuits **113** is provided by configuring the network of paths **111** such that the lattice is formed by a lattice structure, and wherein the lattice structure is periodic, preferably wherein the lattice structure is in the form of a hexagon, such that the network of paths **111** is formed by a plurality of hexagons.

For RUS encoded fusions with time-bin encoded photons, as may be implemented in the FBQC system as shown in Fig. **7B****,** the shown system comprises 24 deterministic entanglement sources, 24 optical switches **(102, 112)** and 43 fusion circuits **(105, 113).** There are 14 fusion circuits at the boundaries performing single-qubit measurements thus only requiring one detector each. Therefore, for time-bin encoding, the total number of detectors is 72.

### Example 7 - An example of the FBQC system according to present disclosure with feedback

In this example, feedback control will be described for the FBQC system as shown in **Fig. 7B** (as is similar to Fig. 6A). In the following, reference to the system is however made to **Fig. 6A** as the optical switches (receiving the photons from a deterministic entanglement source, which we will call a resource state generator (RSG)) is numbered.

In this example, we consider spin-control pulse sequences, unitary gates, optical switches and fusions between RSGs 3 and 4. We assume the use of RUS encoded fusions, with physical temporal fusions (thus with time-bin encoding).

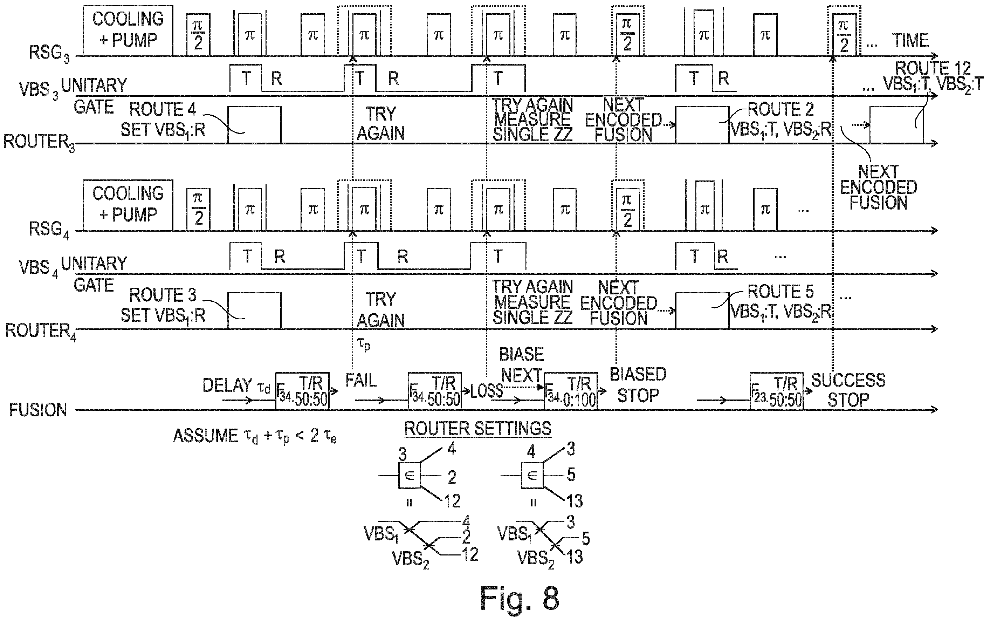

As shown in **Fig. 8****,** both RSGs 3 and 4 first initialize their spin states with nuclear cooling and spin pumping pulses. Reading out the spin effectively clears out all memory from the previous iteration. From here, the spin-photon entanglement sequence starts. A time-bin encoded photon is generated from each RSG and is entangled with its spin states. The two photons are projected into X-basis via VBSs in the unitary gates, and subsequently routed to the same fusion circuit F_{3,4}. The optical switch setting for each RSG is shown in the bottom panel. For physical temporal fusions, the arrival times for photons from the RSGs need to be identical. A physical fusion is attempted with its measurement outcome analyzed. A command will then be sent. The total time it takes before the next set of command arrives includes (1) the time τ_{d} for photons to travel from the first substrate to F_{3,4}, and (2) the time for processing τₚ and sending feedback to the RSGs, i.e. the one or more radiation controllers. During this interval the electron spins will be idle.

The total duration τ_{d} +τₚ is ideally short (within tens of nanoseconds), since the electron spin qubit in each RSG needs to stay coherent during the encoded fusion. To extend its spin coherence, a series of spin n-rotation or refocusing pulses is applied to the spin-qubits. In **Fig. 8** for brevity, we assume τ_{d} + τₚ < 2τ_{echo} where τ_{echo} is the Hahn-echo delay. Physically τ_{echo} is determined by the inter-pulse delay for which the Hahn-echo visibility is maximized. Different QDs may have slightly different optimal τ_{echo}. However, the inter-pulse delay needs to be identical for both RSG pulse control sequence to enable RUS fusion. The Hahn-echo sequence in principle will be extended by including more refocusing n-pulses, until the encoded fusion is completed. This is because n rotation pulses are needed to generate a GHZ-like state within the encoded qubit. Once an encoded fusion succeeds, however, we proceed to perform fusion between the next encoded qubits, which means that a spin n/2 pulse will be applied to generate another encoded qubit. The spin rotation pulse sequence for creating an encoded linear cluster state alternates between n/2 and m n-pulses, where a n/2 pulse is applied before generating the m-photon encoded qubit. This has a nice benefit of terminating the Hahn-echo sequence by projecting the spin on its ground states, thereby avoiding further decoherence. Intriguingly, the relative phases of these n/2 and n pulses could be engineered to implement variants of Carr-Purcell-Meiboom-Gill (CPMG) sequence to enhance its robustness to nuclear noises.

Note that if at a particular time only one encoded fusion (e.g., F_{3,4}) completes, i.e., when the first physical fusion already succeeds, RSGs 3 and 4 might need to idle their electron spins and apply refocusing pulses to maintain their spin coherence until all other encoded fusions have completed. However, since most RUS encoded fusions will yield an outcome within 3 attempts with high probability, it might only be necessary to apply a few refocusing pulses during the idle time.

The above considerations apply only to RUS fusions. For REP fusions with a static repetition code, each RSG generates a redundantly encoded linear cluster state with fixed numbers of photons per encoded qubit, which means the number of n pulses in the Hahn-echo is always fixed. However, the timing condition that τ_{d}+τₚ < nτ_{echo} for some number n still needs to be fulfilled. Ideally n = 1 if the electronics are sufficiently fast. Moreover, for REP fusions, one RSG might suffice to generate time-multiplexed resource states for the whole architecture, given that the fidelity, efficiency and clock rates are high enough. This significantly lowers the number of RSGs, but comes at a cost of reduced loss tolerance due to REP fusions being more susceptible to photon loss. It has been shown that sFFCC using REP fusions can tolerate a maximum loss of 2.25%.

Now we describe the relevant actions for each measurement outcome of physical fusion F_{3,4}:
- Fusion failure: The "Try again" command is sent to the pulse picking controller in RSGs 3 and 4 to apply time-bin excitation pulses for photon emission, which need to be synchronized with the n rotation pulse and match with the laser repetition rate.
- Fusion erasure: This happens due to photon loss, and so the next attempt is biased in ZZ. The "Try again" command is sent. The VBSs for both RSG need to be set such that the unitary gates become an identity operation, and thus the time-bin encoded photons remain in the Z-basis. The VBS in the fusion circuit F_{3,4} is set to fully reflect to perform single-qubit measurements to obtain encoded ZZ outcome.
- Fusion success or maximum attempts reached: When physical fusion is biased or successful, one or more encoded fusion measurement outcomes has been obtained. The current encoded fusion is therefore declared as a success. On the other hand, when a maximum number of physical fusions N is reached for RUS, the encoded fusion has completed. In both cases, further physical fusions are stopped, and the next encoded fusion is initiated. Commands are sent to both RSGs to apply a spin n/2 pulse and reset the VBS settings to default. The routers are reconfigured to direct photons to different fusion circuits for the next layer of fusions, e.g., the photon from RSG 3 is routed to F_{2,3}.

The disclosure has been described with reference to a preferred embodiment. However, the scope of the invention is not limited to the illustrated embodiment, and alterations and modifications can be carried out without deviating from the scope of the invention.

Throughout the description, the use of the terms "one", "second", "preferred", "more preferred", "most preferred" etc. does not imply any particular order or importance but are merely included to identify individual elements. Furthermore, the labelling of a first element does not imply the presence of a second element and vice versa.

### LIST OF REFERENCES

- **101**: FBQC Device
- **102**: optical switch
- **103**: optical fiber
- **104**: plurality of paths
- **105**: fusion circuit
- **106**: another path
- **107**: quantum gate
- **108**: -
- **109**: -
- **110**: FBQC system
- **111**: Network of paths
- **112**: Plurality of optical switches
- **113**: Plurality of fusion circuits

Further details of the present disclosure are provided by the following items.

### ITEMS

1. A fusion based quantum computing (FBQC) device, comprising:
   - a first substrate, wherein the first substrate comprises:
      o a deterministic entanglement source configured to generate a stream of single photons, wherein the deterministic entanglement source is configured to trap a single particle having an intrinsic property of a spin to define a spin-qubit, such that the deterministic entanglement source is configured to hold the spin-qubit, wherein the deterministic entanglement source is configured to allow control of the spin via one or more field(s), such as a magnetic field and/or an electromagnetic field, from one or more radiation source(s), and wherein the deterministic entanglement source is configured such that when the one or more radiation sources is/are operated in a controlled manner, then the deterministic entanglement source emits, in a repetitive manner, a single photon as part of the stream of single photons such that at least the single photon is entangled with the spin-qubit, thereby generating a stream of entangled photons; and
      ∘ an output coupler optically connected to the deterministic entanglement source, such that the output coupler is configured to optically couple out the stream of entangled photons;
   - a second substrate, wherein the second substrate comprises:
      ∘ an optical switch optically connected to the output coupler, wherein the optical switch is configured to direct a plurality of entangled photons from the stream of entangled photons to a plurality of paths; and
      ∘ a fusion circuit optically connected to at least one of the plurality of paths, wherein the fusion circuit is configured to perform a fusion of at least one entangled photon from the plurality of entangled photons from at least one of the plurality of paths with at least another entangled photon arriving from another path;
   - a quantum gate located upstream of the optical switch and configured to provide an operation on the stream of the entangled photons, wherein the operation provides a projection of at least a first entangled photon into a desired basis; and
   - a detector unit located downstream of, or as part of, the fusion circuit, wherein the detector unit is configured to detect whether the fusion is successful or not.
2. The FBQC device according to item 1, wherein the FBQC device further comprises a time-bin interferometer configured to provide time-bin encoding of the stream of the entangled photons.
3. The FBQC device according to item 2, wherein the time-bin interferometer is located between one of the one or more radiation sources and the deterministic entanglement source, and wherein one of said radiation source(s) emits optical pulses to control the spin, such that the time-bin interferometer provides an early time-bin pulse and a late time-bin having a time separation tᵢₙₜ, which in turn generates two entangled time-bin encoded photons from the deterministic entanglement source.
4. The FBQC device according to any of the preceding items, wherein the optical switch is an N-way switch, where N is larger than or equal to 2, preferably where N is larger than 2, such as N=3, or N=4, or N=5 or N=6.
5. The FBQC device according to any of the preceding items, wherein the one or more radiation source(s) comprise(s) one or more radiation controller(s) configured to control the respective radiation source in the controlled manner, and
   wherein the optical switch is an active optical switch comprising a first active element having a switch controller configured to control which path is selected among the plurality of paths for each of the entangled photons in the stream of the entangled photons, and/or wherein the quantum gate comprises a second active element having a quantum gate controller configured to control which desired basis that is selected for each of the entangled photons in the stream of entangled photons, and
   wherein the detector unit is coupled to a processor configured to provide a feedback-signal to the one or more radiation controller(s) and the switch controller and/or the quantum gate controller, whereby the fusion is adaptably controlled and optimized.
6. The FBQC device according to item 5, wherein the first active element comprises a first variable beam splitter, and/or a first electro-optical modulator (EOM), and/or a first phase shifter, and/or wherein the second active element comprises a second variable beam splitter, and/or a second electro-optical modulator (EOM), and/or a second phase shifter.
7. The FBQC device according to any of the preceding items, wherein the deterministic entanglement source and the one or more radiation sources are configured to generate the stream of entangled photons to form a redundantly encoded cluster state or a graph state.
8. The FBQC device according to any of the preceding items, wherein the quantum gate is a unitary gate, which:
   - in a first mode is configured as a Hadamard gate, adapted to projects one or more of the entangled photons into the desired basis being an X-basis or a Y-basis, and
   - in a second mode is configured as an identity operator, adapted to project one or more of the entangled photons into the desired basis being a Z-basis.
9. The FBQC device according to item 3, wherein the unitary gate comprises an additional time-bin interferometer, wherein the additional time-bin interferometer comprises two paths, wherein one of the two paths provides a path difference between the two paths, such that when the two time bins of an encoded photon arrive at the additional time-bin interferometer, they split up along the two paths and recombine to interfere in the same time-bin, as ensured by configuring the additional time-bin interferometer with the same time delay tᵢₙₜ as the time-bin interferometer configured to provide time-bin encoding of the stream of the entangled photons, whereby the entangled time-bin encoded photons are projected into the desired basis.
10. The FBQC device according to any of the preceding items, wherein the first substrate is cryo-compatible.
11. The FBQC device according to any of the preceding items, wherein the deterministic entanglement source is embedded in or optically coupled to a planer waveguide, preferably a photonic crystal waveguide (PCW), more preferably a single-sided waveguide.
12. The FBQC device according to item 11, wherein the deterministic entanglement source is in the form of a quantum dot (QD), preferably a semiconductor GaAS QD or a semiconductor InAs QD.
13. The FBQC device according to item 12, wherein the deterministic entanglement source is based on defects in color centers, or trapped ions or neutral atoms.
14. The FBQC device according to any of the preceding items, wherein the one or more radiation source(s) is a magnetic field generator in the form of an electromagnet configured to generate a magnetic field and apply the magnetic field to the deterministic entanglement source.
15. The FBQC device according to item 14, wherein the magnetic field is applied in a Voigt geometry or in a Faraday geometry.
16. The FBQC device according to item 15, wherein the magnetic field in the Voigt geometry is an in-plane magnetic field of more than 1 T, preferably more than 2T, more preferably more than 3T, most preferably around or more than 4T, or wherein the magnetic field in the Faraday geometry is of more than 10 mT.
17. The FBQC device according to any of the preceding items, wherein one of the one or more radiation source(s) is a first electromagnetic field generator in the form of a first laser configured to initiate the spin by generating laser pulses that are adapted to prepare two spin states in a superposition state, or
   wherein the one or more radiation source(s) is an alternative first electromagnetic field generator in the form of a microwave generator configured to initiate spin by generating microwave pulses that are adapted to prepare two spin states in a superposition state, preferably via a planar antenna located on the first substrate.
18. The FBQC device according to item 17, wherein another of the one or more radiation source(s) is a second electromagnetic field generator in the form of a second laser configured to drive an optical cycling transition of the two spin states, preferably by generating laser pulses, more preferably wherein the laser pulses are in the picosecond regime, most preferably wherein the picosecond regime ranges from 1 ps to 1000 ps.
19. The FBQC device according to item 5 and 18, wherein the feedback signal is provided to the second laser, preferably such that a pulse sequence of pulses from the second laser is modulated.
20. The FBQC device according to any of the preceding items, wherein an optical fiber is connected between the first substrate and the second substrate to optically connect the output coupler and the optical switch.
21. A fusion based quantum computing (FBQC) system, comprising:
   - the FBQC device according to any of the items 1-20;
   - a plurality of optical switches located on the second substrate, or on a plurality of second substrates, and wherein at least one optical switch of the plurality of optical switches is optically connected to the deterministic entanglement source via the output coupler, and wherein the plurality of optical switches is configured to direct a plurality of entangled photons from the stream of entangled photons to a network of paths;
   - a plurality of fusion circuits located on the second substrate, or on a plurality of second substrates, and wherein the plurality fusion circuits is optically connected to the network of paths, wherein the plurality of fusion circuits is configured to perform a plurality of fusions of at least a subset of entangled photons from the plurality of entangled photons from some paths in the network of paths with at least another subset of entangled photons from the plurality of entangled photons arriving from other paths in the network of paths,
      wherein the network of paths arranged in a lattice located on the second substrate, or on a plurality of second substrates, wherein the lattice is defined by a plurality of nodes and a plurality of interconnecting points, wherein each interconnecting point is located between two neighboring nodes, wherein said node comprises one optical switch of the plurality of optical switches, and wherein said interconnecting point comprises one fusion circuit of the plurality of fusion circuits; and
   - a plurality of detector units located downstream of, or as part of, the plurality of fusion circuits, wherein the detector units are configured to detect whether the plurality of fusions is successful or not.
22. The FBQC system according to item 21, wherein the FBQC system is configured to provide simultaneous single photons from the deterministic entanglement source, in the form of a single deterministic source, to the plurality fusion circuits, thereby enabling the plurality of fusions of at least the subset of entangled photons from the plurality of entangled photons from some paths in the network of paths with at least another subset of entangled photons arriving from the other paths in the network of paths.
23. The FBQC system according to item 21, wherein the FBQC system further comprises:
   - a plurality of deterministic entanglement sources located on the first substrate, or on a plurality of first substrates;
   - a plurality of output couplers optically located on the first substrate, or on a plurality of first substrates, wherein the plurality of output couplers is connected to the plurality of deterministic entanglement sources such that the plurality of output couplers is configured to optically couple out the stream of entangled photons from the plurality of deterministic entanglement sources;
   - a plurality of quantum gates located upstream of the plurality of optical switches and configured to provide an operation on the stream of the entangled photons, wherein the operation provides a projection of at least a subset of entangled photons into a desired basis.
24. The FBQC system according to item 23, wherein the FBQC system is configured to provide simultaneous single photons from the plurality of deterministic entanglement sources, and/or from an individual deterministic entanglement source among the plurality of deterministic entanglement sources, to the plurality fusion circuits, thereby enabling the plurality of fusions of at least the subset of entangled photons from the plurality of entangled photons from some paths in the network of paths with at least another subset of entangled photons arriving from the other paths in the network of paths.
25. The FBQC system according to item 24, wherein the simultaneous single photons from the plurality of deterministic entanglement sources to the plurality of fusion circuits is provided by configuring the plurality of deterministic entanglement sources to simultaneously emit single photons.
26. The FBQC system according to any of the items 24-25, wherein the simultaneous single photons from the plurality of deterministic entanglement sources to the plurality of fusion circuits is provided by configuring the network of paths such that the lattice is formed by a lattice structure, and wherein the lattice structure is periodic, preferably wherein the lattice structure is in the form of a hexagon, such that the network of paths is formed by a plurality of hexagons.
27. The FBQC system according to any of the items 22-26, wherein the plurality of quantum gates is located on the second substrate or on a plurality of second substrates.
28. The FBQC system according to any of the items 21-27, wherein said plurality of second substrates are optically connected to each other via a plurality of guiding optics, preferably by a plurality of flexible guiding elements, such as optical fibers and/or preferably by a plurality of free-space guiding elements, such as optical mirrors and/or optical gratings.
29. The FBQC system according to any of the items 23-28, and item 5, wherein each of the plurality of optical switches are active optical switches comprising the first active element having a switch controller configured to control which path is selected in the network of paths for the plurality of entangled photons in the stream of the entangled photons and wherein the plurality quantum gate comprises the second active element having a quantum gate controller configured to control which desired basis that is selected for the plurality of entangled photons in the stream of entangled photons, and
   wherein the plurality of detector units is coupled to the processor configured to provide a feedback-signal to the one or more radiation controller(s) and the switch controller for each of the plurality of optical switches and the quantum gate controller for each of the quantum gates, whereby the plurality of fusions is adaptably controlled and optimized.
30. The FBQC device according to any of the items 23-39, wherein each of the quantum gates in the plurality of quantum gates is a unitary gate, which:
   - in a first mode is configured as a Hadamard gate, adapted to projects one or more of the entangled photons into the desired basis being an X-basis or a Y-basis, and
   - in a second mode is configured as an identity operator, adapted to project one or more of the entangled photons into the desired basis being a Z-basis.
31. The FBQC device according to any of the items 23-30, wherein each of the quantum gates in the plurality of quantum gates comprises an additional time-bin interferometer, wherein the additional time-bin interferometer comprises two paths, wherein one of the two paths provides a path difference between the two paths, such that when the two time bins of an encoded photon arrive at the additional time-bin interferometer, they split up along the two paths and recombine to interfere in the same time-bin, as ensured by configuring the additional time-bin interferometer with the same time delay tᵢₙₜ as the time-bin interferometer configured to provide time-bin encoding of the stream of the entangled photons, whereby the entangled time-bin encoded photons are projected into the desired basis.

## Claims

1. A fusion based quantum computing (FBQC) device, comprising:
- a first substrate, wherein the first substrate comprises:
o a deterministic entanglement source configured to generate a stream of single photons, wherein the deterministic entanglement source is configured to trap a single particle having an intrinsic property of a spin to define a spin-qubit, such that the deterministic entanglement source is configured to hold the spin-qubit, wherein the deterministic entanglement source is configured to allow control of the spin via one or more field(s), such as a magnetic field and/or an electromagnetic field, from one or more radiation source(s), and wherein the deterministic entanglement source is configured such that when the one or more radiation sources is/are operated in a controlled manner, then the deterministic entanglement source emits, in a repetitive manner, a single photon as part of the stream of single photons such that at least the single photon is entangled with the spin-qubit, thereby generating a stream of entangled photons; and
∘ an output coupler optically connected to the deterministic entanglement source, such that the output coupler is configured to optically couple out the stream of entangled photons;
- a second substrate, wherein the second substrate comprises:
∘ an optical switch optically connected to the output coupler, wherein the optical switch is configured to direct a plurality of entangled photons from the stream of entangled photons to a plurality of paths; and
∘ a fusion circuit optically connected to at least one of the plurality of paths, wherein the fusion circuit is configured to perform a fusion of at least one entangled photon from the plurality of entangled photons from at least one of the plurality of paths with at least another entangled photon arriving from another path;
- a quantum gate located upstream of the optical switch and configured to provide an operation on the stream of the entangled photons, wherein the operation provides a projection of at least a first entangled photon into a desired basis; and
- a detector unit located downstream of, or as part of, the fusion circuit, wherein the detector unit is configured to detect whether the fusion is successful or not.

2. The FBQC device according to claim 1, wherein the FBQC device further comprises a time-bin interferometer configured to provide time-bin encoding of the stream of the entangled photons, wherein the time-bin interferometer is located between one of the one or more radiation sources and the deterministic entanglement source, and wherein one of said radiation source(s) emits optical pulses to control the spin, such that the time-bin interferometer provides an early time-bin pulse and a late time-bin having a time separation tᵢₙₜ, which in turn generates an entangled time-bin encoded photon from the deterministic entanglement source.

3. The FBQC device according to any of the preceding claims, wherein the one or more radiation source(s) comprise(s) one or more radiation controller(s) configured to control the respective radiation source in the controlled manner, and
wherein the optical switch is an active optical switch comprising a first active element having a switch controller configured to control which path is selected among the plurality of paths for each of the entangled photons in the stream of the entangled photons, and/or wherein the quantum gate comprises a second active element having a quantum gate controller configured to control which desired basis that is selected for each of the entangled photons in the stream of entangled photons, and
wherein the detector unit is coupled to a processor configured to provide a feedback-signal to the one or more radiation controller(s) and the switch controller and/or the quantum gate controller, whereby the fusion is adaptably controlled and optimized.

4. The FBQC device according to any of the preceding claims, wherein the deterministic entanglement source and the one or more radiation sources are configured to generate the stream of entangled photons to form a redundantly encoded cluster state or a graph state.

5. The FBQC device according to any of the preceding claims, wherein the deterministic entanglement source is embedded in or optically coupled to a planer waveguide, preferably a photonic crystal waveguide (PCW), more preferably a single-sided waveguide, and wherein the deterministic entanglement source is in the form of a quantum dot (QD), preferably a semiconductor GaAs QD or a semiconductor InAs QD, or wherein the deterministic entanglement source is based on defects in color centers, or trapped ions or neutral atoms.

6. The FBQC device according to any of the preceding claims, wherein an optical fiber is connected between the first substrate and the second substrate to optically connect the output coupler and the optical switch.

7. A fusion based quantum computing (FBQC) system, comprising:
- the FBQC device according to any of the claims 1-6;
- a plurality of optical switches located on the second substrate, or on a plurality of second substrates, and wherein at least one optical switch of the plurality of optical switches is optically connected to the deterministic entanglement source via the output coupler, and wherein the plurality of optical switches is configured to direct a plurality of entangled photons from the stream of entangled photons to a network of paths;
- a plurality of fusion circuits located on the second substrate, or on a plurality of second substrates, and wherein the plurality fusion circuits is optically connected to the network of paths, wherein the plurality of fusion circuits is configured to perform a plurality of fusions of at least a subset of entangled photons from the plurality of entangled photons from some paths in the network of paths with at least another subset of entangled photons from the plurality of entangled photons arriving from other paths in the network of paths,
wherein the network of paths arranged in a lattice located on the second substrate, or on a plurality of second substrates, wherein the lattice is defined by a plurality of nodes and a plurality of interconnecting points, wherein each interconnecting point is located between two neighboring nodes, wherein said node comprises one optical switch of the plurality of optical switches, and wherein said interconnecting point comprises one fusion circuit of the plurality of fusion circuits; and
- a plurality of detector units located downstream of, or as part of, the plurality of fusion circuits, wherein the detector units are configured to detect whether the plurality of fusions is successful or not.

8. The FBQC system according to claim 7, wherein the FBQC system is configured to provide simultaneous single photons from the deterministic entanglement source, in the form of a single deterministic source, to the plurality fusion circuits, thereby enabling the plurality of fusions of at least the subset of entangled photons from the plurality of entangled photons from some paths in the network of paths with at least another subset of entangled photons arriving from the other paths in the network of paths.

9. The FBQC system according to claim 7, wherein the FBQC system further comprises:
- a plurality of deterministic entanglement sources located on the first substrate, or on a plurality of first substrates;
- a plurality of output couplers optically located on the first substrate, or on a plurality of first substrates, wherein the plurality of output couplers is connected to the plurality of deterministic entanglement sources such that the plurality of output couplers is configured to optically couple out the stream of entangled photons from the plurality of deterministic entanglement sources;
- a plurality of quantum gates located upstream of the plurality of optical switches and configured to provide an operation on the stream of the entangled photons, wherein the operation provides a projection of at least a subset of entangled photons into a desired basis.

10. The FBQC system according to claim 9, wherein the FBQC system is configured to provide simultaneous single photons from the plurality of deterministic entanglement sources, and/or from an individual deterministic entanglement source among the plurality of deterministic entanglement sources, to the plurality fusion circuits, thereby enabling the plurality of fusions of at least the subset of entangled photons from the plurality of entangled photons from some paths in the network of paths with at least another subset of entangled photons arriving from the other paths in the network of paths.

11. The FBQC system according to claim 10, wherein the simultaneous single photons from the plurality of deterministic entanglement sources to the plurality of fusion circuits is provided by configuring the plurality of deterministic entanglement sources to simultaneously emit single photons.

12. The FBQC system according to any of the claims 10-11, wherein the simultaneous single photons from the plurality of deterministic entanglement sources to the plurality of fusion circuits is provided by configuring the network of paths such that the lattice is formed by a lattice structure, and wherein the lattice structure is periodic, preferably wherein the lattice structure is in the form of a hexagon, such that the network of paths is formed by a plurality of hexagons.

13. The FBQC system according to any of the claims 7-12, and claim 3, wherein each of the plurality of optical switches are active optical switches comprising the first active element having a switch controller configured to control which path is selected in the network of paths for the plurality of entangled photons in the stream of the entangled photons and wherein the plurality quantum gate comprises the second active element having a quantum gate controller configured to control which desired basis that is selected for the plurality of entangled photons in the stream of entangled photons, and
wherein the plurality of detector units is coupled to the processor configured to provide a feedback-signal to the one or more radiation controller(s) and the switch controller for each of the plurality of optical switches and the quantum gate controller for each of the quantum gates, whereby the plurality of fusions is adaptably controlled and optimized.

14. The FBQC device according to any of the claims 7-13, wherein each of the quantum gates in the plurality of quantum gates is a unitary gate, which:
- in a first mode is configured as a Hadamard gate, adapted to projects one or more of the entangled photons into the desired basis being an X-basis or a Y-basis, and
- in a second mode is configured as an identity operator, adapted to project one or more of the entangled photons into the desired basis being a Z-basis.

15. The FBQC device according to any of the claims 7-14, and claim 2, wherein each of the quantum gates in the plurality of quantum gates comprises an additional time-bin interferometer, wherein the additional time-bin interferometer comprises two paths, wherein one of the two paths provides a path difference between the two paths, such that when the two time bins of an encoded photon arrive at the additional time-bin interferometer, they split up along the two paths and recombine to interfere in the same time-bin, as ensured by configuring the additional time-bin interferometer with the same time delay tᵢₙₜ as the time-bin interferometer configured to provide time-bin encoding of the stream of the entangled photons, whereby the entangled time-bin encoded photons are projected into the desired basis.
